# EUROPEAN PATENT APPLICATION

(11) **EP 4 725 976 A1**
(43) Date of publication of application: **15.04.2026**
(21) Application number: 24306670.1
(22) Date of filing: 11.10.2024
(51) Int. Cl.: C08G 63/553, C08G 59/02, C08G 59/34, C08G 63/91, C09D 163/00, C09D 167/06

(54) **POLYMERIC CYCLOALIPHATIC EPOXIDES**

(71) Applicant: ARKEMA FRANCE, 92800 Puteaux (FR)
(72) Inventor: SQUIRES, Kelly, Wetherby, LS22 7NS (GB); PLENDERLEITH, Richard, Wetherby, LS22 7NS (GB); TELITEL, Sofia, 60550 Verneuil-en-Halatte (FR); MELEC, Pierre, 60550 Verneuil-en-Halatte (FR); YOUNG, Hannah, Wetherby, LS22 7NS (GB)
(74) Representative: Arkema Patent

(57) **Abstract**

The present invention relates to polymeric cycloaliphatic epoxides, precursors of such polymeric cycloaliphatic epoxides, compositions containing such polymeric cycloaliphatic epoxides, processes for curing such compositions, cured products thus obtained and uses of such products, notably as inks and coatings for food packaging.

## Description

### FIELD OF THE INVENTION

The present invention relates to polymeric cycloaliphatic epoxides, precursors of such polymeric cycloaliphatic epoxides, compositions containing such polymeric cycloaliphatic epoxides, processes for curing such compositions, cured products thus obtained and uses of such products, notably as inks and coatings for food packaging.

### BACKGROUND OF THE INVENTION

Cycloaliphatic epoxides are extensively used as cationically polymerizable species to form inks, coatings and adhesives.

The following difunctional cycloaliphatic epoxide, available under commercial reference UviCure^{®} S105 from Arkema, gives clear, hard, glossy coatings:

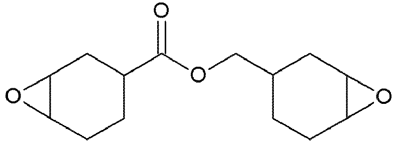

Although this epoxide usually gives good cure speed, brittle mechanical properties may be observed. Further this product will soon be classified as a CMR and will thus need to be replaced by new products showing reduced toxicity and low migration, especially in field of food packaging applications. There is thus a need for polymeric cycloaliphatic epoxides showing high curing speed and able to provide cured products with good mechanical properties such as scratch resistance, solvent resistance, hardness and/or flexibility.

### SUMMARY OF THE INVENTION

A first aspect of the invention is a cycloaliphatic epoxide polyester obtained by epoxidizing a cycloalkene polyester based on:
A) a polyol component;
B) a polyacid component; and
C) a monoalcohol or monoacid cycloalkene component;
wherein component C) has a hydroxyl functionality of 0 or 1, a carboxyl functionality of 0 or 1 and a hydroxyl + carboxyl functionality of 1.

Another aspect of the invention is a cyclohexene polyester based on:
A) a polyol component;
B) a polyacid component; and
C) a monoacid cyclohexene component;
wherein
component B) comprises more than 70% mol at least one diacid having a cyclohexene ring based on the total number of moles of component B); and
component C) has a hydroxyl functionality of 0 and a carboxyl functionality of 1.

Another aspect of the invention is a cyclohexene polyester based on:
A) a polyol component;
B) a polyacid component; and
C) a monoalcohol cyclohexene component;
wherein
component B) comprises at least one diacid having a cyclohexene ring; and
component C) has a hydroxyl functionality of 1 and a carboxyl functionality of 0.

Another aspect of the invention is a composition comprising:
a1) a cycloaliphatic epoxide polyester component according to the invention; and
b1) a cationically polymerizable component other than component a1).

Another aspect of the invention is a composition comprising:
a2) a cycloaliphatic epoxide polyester component according to the invention; and
b2) a (meth)acrylate-functionalized component.

Yet another aspect of the invention is a process for the preparation of a cured product, comprising curing a composition according to the invention, in particular by exposing the composition to radiation such as UV, near-UV, visible, infrared, near-infrared, and/or electron beam radiation.

Yet another aspect of the invention is a cured product obtained by curing a composition according to the invention.

Yet another aspect of the invention is a use of a cycloaliphatic epoxide polyester according to the invention, for obtaining an ink, a coating, a sealant, an adhesive, a molded article or a 3D-printed article, in particular an ink or a coating, more particularly a metal coating.

### DETAILED DESCRIPTION

### Definitions

In the present application, the term "comprise(s) a/an" means "comprise(s) one or more".

Unless mentioned otherwise, the % by weight in a compound or a composition are expressed based on the weight of the compound, respectively of the composition.

The term "carbocyclic ring" means a ring comprising only carbon ring atoms. A "C4-C8 carbocyclic ring" means a ring comprising 4 to 8 carbon ring atoms.

The term "alkyl" means a monovalent saturated hydrocarbon radical of formula -CₙH₂ₙ₊₁. An alkyl may be linear or branched. Examples of alkyl groups include methyl, ethyl, propyl, isopropyl, butyl, isobutyl, tert-butyl, pentyl and hexyl. A C1-C6 alkyl is an alkyl having 1 to 6 carbon atoms.

The term "aryl" means an aromatic hydrocarbon group. Examples of aryl groups include phenyl, tolyl.

The term "aliphatic" means a non-aromatic acyclic compound. It may be linear or branched, saturated or unsaturated. It may be unsubstituted or substituted by one or more groups, for example selected from alkyl, hydroxyl, halogen (Br, Cl, I), isocyanate, carbonyl, amine, carboxylic acid, -C(=O)-OR', -C(=O)-O-C(=O)-R', each R' being independently a C1-C6 alkyl. It may comprise one or more bonds selected from ether, ester, amide, urethane, urea and combinations thereof.

The term "acyclic" means a compound that does not comprise any rings.

The term "cycloaliphatic" means a compound comprising a non-aromatic cyclic ring comprising carbon ring atoms and optionally one or more heteroatoms (O, N or S) as ring atoms. It may be unsubstituted or substituted by one or more groups as defined for the term « aliphatic ».

The term "aromatic" means a compound comprising an aromatic ring, which means that it respects Hückel's aromaticity rule, in particular a compound comprising a phenyl group. It may be unsubstituted or substituted by one or more groups as defined for the term "aliphatic".

The term "saturated" means a compound that does not comprise any double or triple carbon-carbon bonds.

The term "ethylenically unsaturated" means a compound that comprises a non-aromatic double carbon-carbon bond.

### Cycloaliphatic epoxide polyester

The invention relates to a cycloaliphatic epoxide polyester. A cycloaliphatic epoxide polyester may be defined as a polyester bearing at least one cycloaliphatic epoxide moiety.

As used herein, a polyester means a polymer comprising a plurality of ester bonds. A polyester is generally based on a polyol component and a polyacid component and may further be optionally based on a monoalcohol component or a monoacid component. Accordingly, a polyester typically comprises moieties derived from the polymerization of a polyol component and a polyacid component and may further optionally comprise moieties derived from the polymerization of a monoalcohol component and/or a monoacid component.

As used herein, a cycloaliphatic epoxide moiety means a ring system comprising a saturated C4-C8 carbocyclic ring and an oxirane ring fused to one another.

Each cycloaliphatic epoxide moiety may independently be a monovalent or divalent moiety comprising an oxirane ring fused to an optionally substituted cyclohexyl ring. In particular, each cycloaliphatic epoxide moiety may independently be an optionally substituted moiety according to the following formulae (1) and (2) (optional substituents are not shown): 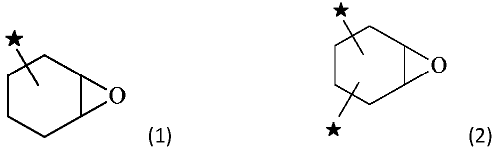 wherein each symbol * represents a (poly)ester moiety (i.e. a moiety comprising at least one ester bond).

In formulae (1) and (2), the cyclohexyl ring may be a bridged or non-bridged cyclohexyl ring optionally bearing one or more substituents selected from alkyl or aryl, preferably alkyl.

The cycloaliphatic epoxide polyester of the invention preferably bears at least one optionally substituted moiety of formula (1) and may further optionally bear at least one optionally substituted moiety of formula (2). In particular, the cycloaliphatic epoxide polyester of the invention preferably bears at least one optionally substituted moiety of formula (1) and at least one optionally substituted moiety of formula (2).

In a preferred embodiment, the cycloaliphatic epoxide polyester bears at least two cycloaliphatic epoxide moieties. In a particularly preferred embodiment, the cycloaliphatic epoxide polyester bears at least three cycloaliphatic epoxide moieties.

The cycloaliphatic epoxide polyester of the invention may further optionally bear one or more monocyclic epoxide moieties. Each monocyclic epoxide moiety may independently be a monovalent or divalent monocyclic moiety comprising an optionally substituted oxirane ring. In particular, each monocyclic epoxide moiety may independently be an optionally substituted moiety according to the following formulae (3) and (4) (optional substituents are not shown): 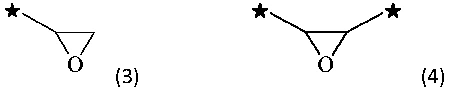 wherein each symbol * represents a (poly)ester moiety (i.e. a moiety comprising at least one ester bond).

In formulae (3) and (4), the oxirane ring may optionally bear one or more substituents selected from alkyl.

The cycloaliphatic epoxide polyester of the invention is obtained by epoxidizing a cycloalkene polyester as detailed below.

### Cycloalkene polyester

The starting material used to obtain the cycloaliphatic epoxide polyester of the invention is a cycloalkene polyester.

A cycloalkene polyester may be defined as a polyester that bears at least one cycloalkene moiety. As used herein, a cycloalkene moiety means an ethylenically unsaturated C4-C8 carbocyclic ring.

Each cycloalkene moiety may independently be a monovalent or divalent moiety comprising an optionally substituted cyclohexenyl ring. In particular, each cycloalkene moiety may independently be an optionally substituted moiety according to the following formulae (5) and (6) (optional substituents are not shown): 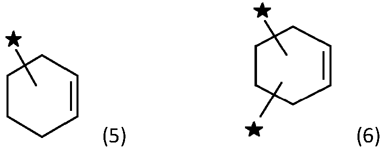 wherein each symbol * represents a (poly)ester moiety (i.e. a moiety comprising at least one ester bond).

In formulae (5) and (6), the cyclohexenyl ring may be a bridged or non-bridged cyclohexenyl ring optionally bearing one or more substituents selected from alkyl or aryl, preferably alkyl.

The cycloalkene polyester of the invention preferably bears at least one optionally substituted moiety of formula (5) and may further optionally bear at least one optionally substituted moiety of formula (6). In a preferred embodiment, the cycloalkene polyester of the invention bears at least one optionally substituted moiety of formula (5) and at least one optionally substituted moiety of formula (6).

In a preferred embodiment, the cycloalkene polyester bears at least two cyclohexene moieties. In a particularly preferred embodiment, the cycloalkene polyester bears at least three cyclohexene moieties.

The cycloalkene polyester of the invention may further optionally bear one or more non-endocyclic ethylenic unsaturations (i.e. ethylenic unsaturations which are not within a ring).

The epoxidation of the cycloalkene polyester may be carried out to transform at least part of the cyclohexene moieties of formula (5) and (6) into cycloaliphatic epoxide moieties of formula (1) and (2). If the cycloalkene polyester further comprises one or more non-endocyclic ethylenic unsaturations, the epoxidation may also transform at least part of the non-endocyclic ethylenic unsaturations into monocyclic epoxide moieties of formulae (3) and (4).

The cyclohexene polyester is based on:
A) a polyol component;
B) a polyacid component; and
C) a monoalcohol or monoacid cycloalkene component.

As used herein, the term "cyclohexene polyester based on components A), B) and C)" means that the cyclohexene polyester comprises units derived from the reaction of components A), B) and C).

In a preferred embodiment, component A) comprises an ethylenically unsaturated polyol and/or component B) comprises an ethylenically unsaturated polyacid, preferably component B) comprises an ethylenically unsaturated polyacid.

The cyclohexene polyester may have a number average molecular weight of from 200 to 1000 g/mol, in particular from 250 to 800 g/mol, more particularly from 300 to 600 g/mol. The cyclohexene polyester may have a weight average molecular weight of from 250 to 2000 g/mol, in particular from 300 to 1500 g/mol, more particularly from 350 to 1000 g/mol. Then number average and weight average molecular weights may be determined by gas phase chromatography (GPC) with a refractive index detector at 35°C using polystyrene standards and THF as an eluent with a flow rate of 1 mL/min.

In a particularly preferred embodiment, the cyclohexene polyester has an acid number from 0.0 to 5.0 mg KOH/g, preferably from 0.0 to 2.0 mg KOH/g, more preferably from 0.0 to 0.50 mg KOH/g.

Components A), B and C) may be as detailed below. Components A), B and C) are distinct from one another. The cyclohexene polyester may not comprise units derived from a component other than components A), B) and C).

### Polyol component

The cyclohexene polyester is based on a polyol component, also referred to as component A).

A polyol component comprises or consists of at least one polyol. A polyol component may comprise or consist of a mixture of polyols. As used herein, a polyol is a compound bearing at least two hydroxyl functional groups.

Component A) may have a hydroxyl functionality of 2 to 6, preferably from 2 to 4, more preferably from 2 to 3, even more preferably 2. As used herein, the term "hydroxyl functionality of component Z)" means the number of OH groups of component Z). If component Z) comprises a mixture of polyols, the OH functionality of the mixture corresponds to the average number of OH groups of the mixture of polyols.

Component A) may comprise or consist of a diol component, also referred to as component A1), and optionally a branching polyol component, also referred to as component A2).

A diol component comprises or consists of at least one diol. A diol component may comprise or consist of a mixture of diols. As used herein, a diol is a compound bearing at least two hydroxyl functional groups. The hydroxyl functionality of the diol component is equal to 2.

In particular, component A1) may comprise or consist of at least one diol selected from the group consisting of an aliphatic diol, a cycloaliphatic diol, an aromatic diol, and combinations thereof. More particularly, component A1) may comprise or consist of at least one an aliphatic diol which can be saturated or ethylenically unsaturated, preferably saturated.

Examples of suitable aliphatic diols include ethylene glycol, di-, tri- or polyethylene glycol, 1,2- or 1,3-propylene glycol, di-, tri- or poly(1,2-propylene glycol), di-, tri- or poly(1,3-propylene glycol), 1,2-, 1,3- or 1,4-butylene glycol, di-, tri- or poly(1,4-butylene glycol), 1,5-pentanediol, 1,6-hexanediol, 1,7-heptanediol, 1,8-octanediol, 1,9-nonanediol, 1,10-decanediol, 1,12-dodecanediol, 2-methyl-1,3-propanediol, 2,2-dimethyl-1,3-propanediol, 2,2-diethyl-1,3-propanediol, 2-methyl-2-ethyl-1,3-propanediol, 3-methyl-1,5-pentanediol, 3,3-dimethyl-1,5-pentanediol, 2,4-diethyl-1,5-pentanediol, 3-butyl-3-ethyl-1,5-pentane diol, 2,2,4-trimethyl 1,5-pentanediol, 2-butene-1,4-diol, 3-hexene-1,6-diol, as well as the alkoxylated (i.e. ethoxylated and/or propoxylated) derivatives thereof, and combinations thereof.

Examples of suitable cycloaliphatic diols include 1,1-, 1,2-, 1,3- or 1,4-cyclohexanedimethanol, 1,2-, 1,3- or 1,4-cyclohexanediol, hydrogenated bisphenol A, isosorbide, isoidide, isomannide, [1,1'-bi(cyclohexane)]-4,4'-diol, 4,4'-methylenebis(cyclohexanol), 1,4-anhydroerythritol, 4-cyclopentene-1,3-diol, 1,1-, 1,2-, 1,3- or 1,4-cyclohexenedimethanol, 1,2-, 1,3- or 1,4-cyclohexenediol, as well as the alkoxylated (i.e. ethoxylated and/or propoxylated) derivatives thereof, and combinations thereof.

Examples of suitable aromatic diols include bisphenol A, bisphenol F, 1,2-, 1,3- or 1,4-benzenedimethanol, benzopinacol, bipyridine diols, dihydroxynaphthalenes, binaphthols, as well as the alkoxylated (i.e. ethoxylated and/or propoxylated) derivatives thereof, and combinations thereof.

More particularly, component A1) may comprise or consist of at least one diol selected from the group consisting of neopentyl glycol, ethylene glycol, diethylene glycol, 1,2- or 1,3-propanediol, 1,2-, 1,3- or 1,4-butanediol, 1,5-pentanediol, 1,6-hexanediol, as well as the alkoxylated (i.e. ethoxylated and/or propoxylated) derivatives thereof, and combinations thereof.

In a preferred embodiment, component A1) may be substantially free of a cycloaliphatic diol.

As used herein, the term component Y) is substantially free of compound X means that component Y) comprises less than 5 mol%, less than 4 mol%, less than 3 mol%, less than 2 mol%, less than 1 mol% or even 0 mol%, of compound X, based on the total number of moles of component Y).

In a preferred embodiment, component A1) may be substantially free of an aromatic diol.

In a preferred embodiment, component A1) may be substantially free of a cyclic (i.e. aromatic and/or cycloaliphatic) diol.

Component A) may further comprise a branching polyol component, also referred to as component A2). A branching polyol component comprises or consists of at least one branching polyol. A branching polyol component may comprise or consist of a mixture of branching polyols. As used herein, a branching polyol is a compound bearing at least three hydroxyl functional groups. Accordingly, the hydroxyl functionality of the branching polyol component is at least 3.

In particular, component A2) may comprise at least one branching polyol selected from glycerol, a di-, tri- or polyglycerol, trimethylolmethane, trimethylolethane, trimethylolpropane, di(trimethylolpropane), pentaerythritol, di(pentaerythritol), sorbitol, a hydroxylated vegetable oil, a tris(hydroxyalkyl)isocyanurate as well as the alkoxylated (i.e. ethoxylated and/or propoxylated) derivatives thereof, and combinations thereof.

In one embodiment, component A) is free of component A2).

As used herein, the term component Y) is free of compound X means that component Y) comprises 0 mol%, of compound X, based on the total number of moles of component Y).

In an alternative embodiment, component A) comprises component A2) and the amount of component A2) is from 0.001 to 10%, in particular from 0.2 to 5%, more particularly from 0.3 to 4%, by weight based on the weight of component A).

Component A) may represent from 2 to 50%, in particular from 5 to 40%, of the total weight of components A) + B) + C).

When component C) has a hydroxyl functionality of 1, component A) may represent from 2 to 15%, in particular from 5 to 10%, of the total weight of components A) + B) + C). When component C) has a carboxyl functionality of 1, component A) may represent from 15 to 50%, in particular from 20 to 40%, of the total weight of components A) + B) + C).

Component A) may represent from 5 to 60%, in particular from 10 to 50%, of the total number of moles of components A) + B) + C).

When component C) has a hydroxyl functionality of 1, component A) may represent from 5 to 25%, in particular from 10 to 20%, of the total number of moles of components A) + B) + C). When component C) has a carboxyl functionality of 1, component A) may represent from 25 to 60%, in particular from 30 to 50%, of the total number of moles of components A) + B) + C).

### Polyacid component

The cyclohexene polyester is further based on a polyacid component, also referred to as component B).

A polyacid component comprises or consists of at least one polyacid. A polyacid component may comprise or consist of a mixture of polyacids. As used herein, a polyacid is a compound bearing at least two carboxylic acid functional groups or a derivative thereof (i.e. a compound bearing functional groups which can be hydrolyzed to generate at least two carboxylic acid functional groups in situ, such as cyclic anhydrides and mono- or di(C1-C6 alkyl) esters).

Component B) may have a carboxyl functionality of 2 to 4, preferably from 2 to 3, more preferably 2. As used herein, the term carboxyl functionality of component Z) means the number of COOH groups or a derivative thereof (i.e. a functional group which can be hydrolyzed to generate one or more COOH groups in situ such as cyclic anhydrides and mono- or di(C1-C6 alkyl) esters) of component Z). For example, a cyclic anhydride has a carboxyl functionality of 2 as it leads to 2 COOH groups after hydrolysis. If component Z) comprises a mixture of polyacids, the COOH functionality of the mixture corresponds to the average number of COOH groups or derivatives thereof of the mixture of polyacids.

Component B) may comprise or consist of diacid component, also referred to as component B1), and optionally a branching polyacid component, also referred to as component B2).

A diacid component comprises or consists of at least one diacid. A diacid component may comprise or consist of a mixture of diacids. As used herein, a diacid is a compound bearing exactly two carboxylic acid functional groups or a derivative thereof (i.e. a compound bearing functional groups which can be hydrolyzed to generate two carboxylic acid functional groups in situ, such as cyclic anhydrides and mono- or di(C1-C6 alkyl) esters). The carboxyl functionality of the diacid component is equal to 2.

In particular, component B1) may comprise at least one diacid selected from the group consisting of an aromatic diacid, a saturated or ethylenically unsaturated aliphatic diacid, a saturated or ethylenically unsaturated cycloaliphatic diacid and combinations thereof. More particularly, component B1) may comprise at least one saturated or ethylenically unsaturated cycloaliphatic diacid, preferably at least one ethylenically unsaturated cycloaliphatic diacid.

Examples of suitable aromatic diacids include phthalic acid, terephthalic acid, isophthalic acid, bis(4-carboxyphenyl)methane, dimethyl phthalate, dimethyl terephthalate, dimethyl isophthalate, phthalic anhydride and combinations thereof.

Examples of suitable saturated aliphatic diacids include adipic acid, dimethyl adipate, diethyl adipate, sebacic acid, dimethyl sebacate, diethyl sebacate, succinic acid, dimethyl succinate, diethyl succinate, succinic anhydride, 2-methylsuccinic acid, 2-ethylsuccinic acid, 2,2-dimethylsuccinic acid, pimelic acid, suberic acid, azelaic acid, 1,11-undecanedioic acid, 1,12-dodecanedioic acid, oxalic acid, dimethyl oxalate, diethyl oxalate, malonic acid, dimethyl malonate, diethyl malonate, 2-methylmalonic acid, 2-ethylmalonic acid, glutaric acid, dimethyl glutarate, diethyl glutarate, glutaric anhydride, 3,3-dimethylglutaric acid, 3,3-diethylglutaric acid, a C32-C36 saturated fatty acid dimer and combinations thereof.

Examples of suitable ethylenically unsaturated aliphatic diacids include itaconic acid, citraconic acid, mesaconic acid, glutaconic acid, muconic acid, fumaric acid, maleic acid, maleic anhydride and combinations thereof.

Examples of suitable saturated cycloaliphatic diacids include cyclopentane 1,2- or 1,3-dicarboxylic acid, cyclohexane 1,2-, 1,3- or 1,4-dicarboxylic acid, cyclohexane-1,2-dicarboxylic anhydride, cycloheptane 1,2-dicarboxylic acid, 1,2-, 1,3 or 1,4-bis(carboxymethyl)cyclohexane.

Examples of suitable ethylenically unsaturated cycloaliphatic diacids include tetrahydrophthalic acid, tetrahydrophthalic anhydride and combinations thereof.

More particularly, component B1) may comprise at least one diacid having a bridged or non-bridged cyclohexene ring. Even more particularly component B1) may comprise at least one diacid selected from tetrahydrophthalic acid, tetrahydrophthalic anhydride, methyltetrahydrophthalic acid, methyltetrahydrophthalic anhydride, norbornene dicarboxylic acid, norbornene dicarboxylic anhydride, and mixtures thereof.

In a preferred embodiment, component B1) comprises at least 60%, at least 70%, at least 80%, at least 90%, at least 95%, or even100%, by weight of diacid having a bridged or non-bridged cyclohexene ring based on the weight of component B1).

Component B) may further comprise a branching polyacid component, also referred to as component B2). A branching polyacid component comprises or consists of at least one branching polyacid. A branching polyacid component may comprise or consist of a mixture of branching polyacids. As used herein, a branching polyacid is a compound bearing at least three carboxylic acid functional groups or a derivative thereof. Accordingly, the carboxyl functionality of the branching polyacid component is at least 3.

Examples of suitable branching polyacids include trimellitic acid, pyromellitic acid, hemimellitic acid, mellitic acid, derivatives thereof and mixtures thereof.

In a preferred embodiment, component B) is free of component B2).

In an alternative embodiment, component B) comprises component B2) and the amount of component B2) is from 0.001 to 10%, in particular from 0.2 to 5%, more particularly from 0.3 to 4%, by weight based on the weight of component B).

Component B) may represent from 5 to 70%, in particular from 10 to 60%, of the total weight of components A) + B) + C).

When component C) has a hydroxyl functionality of 1, component B) may represent from 30 to 60%, in particular from 35 to 55%, of the total weight of components A) + B) + C). When component C) has a carboxyl functionality of 1, component B) may represent from 5 to 35%, in particular from 10 to 30%, of the total weight of components A) + B) + C).

Component B) may represent from 5 to 50%, in particular from 10 to 40%, of the total number of moles of components A) + B) + C).

When component C) has a hydroxyl functionality of 1, component B) may represent from 25 to 50%, in particular from 30 to 45%, of the total number of moles of components A) + B) + C). When component C) has a carboxyl functionality of 1, component B) may represent from 5 to 25%, in particular from 10 to 20%, of the total number of moles of components A) + B) + C).

### Monoalcohol or monoacid cycloalkene component

The cyclohexene polyester is based on a monoalcohol or monoacid cycloalkene component, also referred to as component C).

A monoalcohol or monoacid cycloalkene component comprises or consists of at least one monoalcohol or monoacid cycloalkene. A monoalcohol or monoacid cycloalkene component may comprise or consist of a mixture of monoalcohol or monoacid cycloalkenes. As used herein, a monoalcohol or monoacid cycloalkene is a compound bearing a cycloalkene ring (which may be bridged or non-bridged) and a single hydroxyl functional group or a single carboxyl functional group or a derivative thereof.

Component C) has a hydroxyl functionality of 0 or 1, a carboxyl functionality of 0 or 1 and a hydroxyl + carboxyl functionality of 1.

In a preferred embodiment, component C) comprises or consists of at least one monoalcohol cyclohexene. In particular, component C) may comprise at least one bridged or non-bridged monoalcohol cyclohexene, preferably at least one non-bridged monoalcohol cyclohexene.

Examples of suitable monoalcohol cyclohexenes include 3-cyclohexene-1-ol, 4-cyclohexene-1-ol, 3-cyclohexene-1-methanol, 6-methyl-3-cyclohexene-1-methanol, 3-methyl-3-cyclohexene-1-methanol, 4-methyl-3-cyclohexene-1-methanol, 4,6-dimethyl-3-cyclohexene-1-methanol, 2-butyl-3-cyclohexene-1-methanol, 6-ethyl-3-cyclohexene-1-methanol, 1-methyl-3-cyclohexene-1-methanol, 1-ethyl-3-cyclohexene-1-methanol, 3,6-dimethyl-3-cyclohexene-1-methanol, 4,6-dimethyl-3-cyclohexene-1-methanol, 3-phenyl-3-cyclohexene-1-methanol, 6-phenyl-3-cyclohexene-1-methanol, 2,5-dimethyl-2-phenyl-3-cyclohexene-1-methanol, 5-norbornene-2-methanol and mixtures thereof. A particularly preferred monoalcohol cyclohexene is 3-cyclohexene-1-methanol.

In another embodiment, component C) comprises or consists of at least one monoacid cyclohexene. In particular, component C) may comprise at least one bridged or non-bridged monoacid cyclohexene, preferably at least one non-bridged monoacid cyclohexene.

Examples of suitable monoacid cyclohexenes include 2-cyclohexene-1-carboxylic acid, 3-cyclohexene-1-carboxylic acid, 6-methyl-3-cyclohexene-1-carboxylic acid, 4-methyl-3-cyclohexene-1-carboxylic acid, 5-norbornene-2-carboxylic acid, 5-norbornene-2-acetic acid and mixtures thereof. A particularly preferred monoacid cyclohexene is 3-cyclohexene-1-carboxylic acid.

Component C) may represent from 20 to 80%, in particular from 30 to 70%, of the total weight of components A) + B) + C).

Component C) may represent from 20 to 70%, preferably from 30 to 60%, of the total number of moles of components A) + B) + C).

When component C) has a hydroxyl functionality of 1, component C) may represent from 50 to 90%, in particular from 60 to 85%, of the total number of moles of components A) + C). When component C) has a carboxyl functionality of 1, component C) may represent from 50 to 90%, in particular from 60 to 85%, of the total number of moles of components B) + C).

### Esterification

The cyclohexene polyester may be obtained by reacting components A), B) and C). Components A), B) and C) may be reacted can be reacted simultaneously or sequentially, for example by reacting part of the components in a first step and then adding the rest of the components in a second step.

In particular, the cyclohexene polyester may be obtained with the following successive steps:
i) reacting components A) and B) to form an OH- or COOH-functionalized polyester;
ii) reacting the OH or COOH-functionalized polyester obtained in step i) with component C) to form a cyclohexene polyester;
iii) optionally reacting the cyclohexene polyester obtained in step ii) with a neutralizing agent to reach an acid number of from 0.0 to 5.0 mg KOH/g, preferably from 0.0 to 2.0 mg KOH/g, more preferably from 0.0 to 0.50 mg KOH/g.

In one embodiment, the polyester formed in step i) is a COOH-functionalized polyester and component C) used in step ii) comprises a monoalcohol cyclohexene.

In another embodiment, the polyester formed in step i) is an OH-functionalized polyester and component C) used in step ii) comprises a monoacid cyclohexene.

Components A), B) and C) may be as described above.

In step i), an OH or COOH-functionalized polyester may be formed by reacting a polyol component A) and a polyacid component B). The reaction may be conducted by heating components A) and B) at a temperature of 130°C to 170°C, preferably 140 to 160°C. The reaction may be conducted in the presence of an esterification catalyst. Examples of suitable esterification catalysts include organometallic compounds such as tin oxide, monobutyl tin oxide or butyl titanate; inorganic acids such as hydrochloric acid, sulfuric acid and phosphoric acid; salts of inorganic acids such as diammonium, disodium or dipotassium bisulphate, ammonium, sodium or potassium hydrogen phosphate, ammonium, sodium or potassium phosphate; organic acids, including alkyl- or arylsulfonic acids such as para-toluenesulfonic acid, 2-naphthalenesulfonic acid, methanesulfonic acid, trifluoromethanesulfonic acid, ethanesulfonic acid, and benzenesulfonic acid. The amount of esterification catalyst may be from 0 to 1.50% by weight based on the weight of components A) + B). Preferably, the reaction is conducted in the absence of an esterification catalyst.

Step i) may be carried out until a polyester having the desired hydroxyl number and/or acid number is obtained. The degree of esterification may be followed by determining the amount of water formed in the course of the reaction and the properties of the obtained polyester, for example the hydroxyl number, the acid number, the molecular weight or the viscosity.

In step ii), the reaction may be carried out by adding component C) in the mixture obtained at the end of step i) and heating at a temperature of 180°C to 260°C, preferably from 200°C to 250°C. The water formed during the esterification reaction may be removed by distillation, under vacuum or with an azeotrope-forming solvent. These operating conditions may be maintained until a polyester having the desired hydroxyl value and/or acid value is obtained. The degree of esterification may be followed by determining the amount of water formed in the course of the reaction and the properties of the obtained polyester, for example the hydroxyl value, the acid value, the molecular weight or the viscosity.

In step iii), the reaction may be carried out by adding a neutralizing agent in the mixture obtained at the end of step ii). A neutralizing agent is a compound bearing at least one COOH-reactive group, in particular at least one group selected from an alcohol group, a primary amino group, a secondary amino group, an epoxy group, more particularly at least one epoxy group. Examples of suitable neutralizing agents include diisopropylamine, 1,4-butanediol diglycidyl ether, glycidyl methacrylate, glycidyl ester of neodecanoic acid (versatic acid 10).

### Epoxidation

The cycloaliphatic epoxide polyester of the invention may be obtained by epoxidizing a cycloalkene polyester with any suitable epoxidation agent.

The epoxidation of the cycloalkene polyester may be carried out with a peracid such as 3-chloroperbenzoic acid or peracetic acid, or with another epoxidation agent such as hydrogen peroxide, t-butyl hydroperoxide or sodium hypochlorite.

The epoxidation may be carried out in the presence of a solvent. The solvent may be selected from hydrocarbons, chlorinated solvents, ketones and esters. Examples of suitable solvents include aromatic hydrocarbons having 6 to 15 carbon atoms, such as benzene, xylene, toluene, ethylbenzene and isopropylbenzene; aliphatic acyclic or cyclic hydrocarbons having 4 to 30 carbon atoms, such as cyclohexane, heptane, hexane, octane and kerosene; chlorinated solvents such as dichloromethane, or dichloroethane; ketones having 3 to 10 carbon atoms such as acetone, methyl ethyl ketone and methyl isobutyl ketone; and esters having 3 to 15 carbon atoms, such as ethyl acetate, butyl acetate, cellosolve acetate (ethylene glycol monoethyl ether acetate), carbitol acetate (diethylene glycol monoethyl ether acetate), methyl acetoacetate, ethyl acetoacetate, methyl propionate, dimethyl phthalate and diethyl phthalate.

The epoxidation may be carried out in the presence of a catalyst. The catalyst may be selected from inorganic acids such as phosphoric acid, phosphorous acid, hypophosphorous acid, boric acid and sulfuric acid; organic acids such as formic acid, acetic acid, chloroacetic acid, trifluoroacetic acid, paratoluenesulfonic acid and methanesulfonic acid; and supported solid acids such as cation exchange resins and acidic zeolites.

The epoxidation may be carried out in the presence of a weak base. The weak base may be selected from carbonates such as sodium carbonate, potassium carbonate, sodium hydrogen carbonate and potassium hydrogen carbonate; phosphates such as sodium or potassium salts of metaphosphoric acid, orthophosphoric acid, pyrophosphoric acid, polyphosphoric acid or hypophosphorous acid; silicates such as sodium or potassium salts of orthosilicic acid or metasilicic acid; acetates such as sodium acetate or potassium acetate.

The epoxidation may be carried out at a temperature of 0 to 100°C.

After epoxidation, the cycloaliphatic epoxide polyester of the present invention thus contains multiple epoxide groups separated from one another and available for curing.

In a preferred embodiment, the cycloaliphatic epoxide polyester of the present invention may be according to the following structure (7): 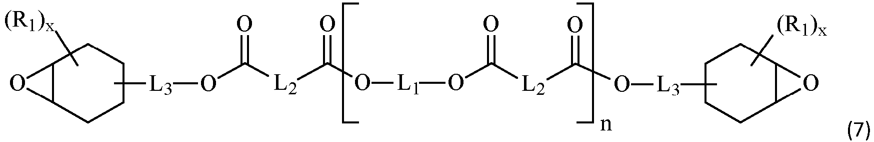 wherein
each L₁ is independently the residue of a diol;
each L₂ is independently the residue of a diacid or a derivative thereof;
each L₃ is independently a bond or a linker;
each R₁ is independently selected from alkyl or aryl or two R₁ groups may form an alkylene bridge.
n is from 1 to 20
each x is independently from 0 to 4.

In particular, the cycloaliphatic epoxide polyester of the present invention may be according to the following structure (7a): 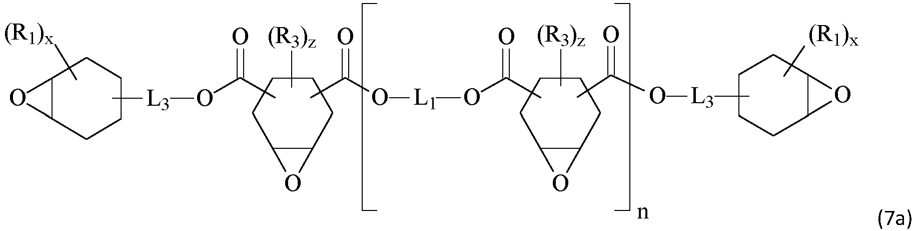 wherein
L₁, L₃, R₁, n and x are as defined for formula (7);
each R₃ is independently selected from alkyl or aryl or two R₃ groups may form an alkylene bridge;
each z is independently from 0 to 4.

In another preferred embodiment, the cycloaliphatic epoxide polyester of the present invention may be according to the following structure (8): 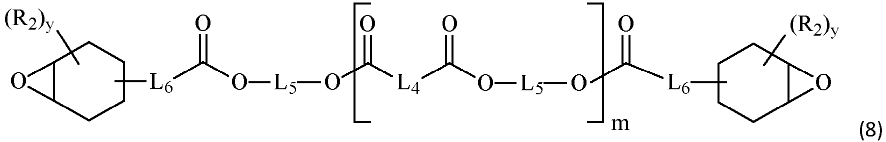 wherein
each L₄ is independently the residue of a diacid or a derivative thereof;
each L₅ is independently the residue of a diol;
each L₆ is independently a bond or a linker;
each R₂ is independently selected from alkyl or aryl or two R₁ groups may form an alkylene bridge.
m is from 1 to 20
each y is independently from 0 to 4.

In particular, the cycloaliphatic epoxide polyester of the present invention may be according to the following structure (8a): 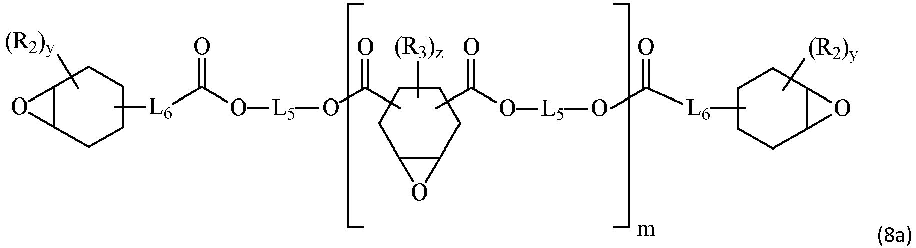 wherein
L₅, L₆, R₂, m and y are as defined for formula (8);
each R₃ is independently selected from alkyl or aryl or two R₃ groups may form an alkylene bridge;
each z is independently from 0 to 4.

In formulae (7), (7a), (8) and (8a), each L₁ and L₅ is independently the residue of a diol. As used herein the term "residue of a diol" means a linker obtained by removing the two hydroxyl groups of a diol. Examples of suitable diols are as defined above for component A1). In a particularly preferred embodiment, each L₁ and Ls is the residue of ethylene glycol (i.e. -CH₂-CH₂-).

In formulae (7) and (8), each L₂ and L₄ is independently the residue of a diacid or a derivative thereof. As used herein the term "residue of a diacid" means a linker obtained by removing the two carboxyl groups of a diacid or a derivative thereof. Examples of suitable diacids are as defined above for component B1).

In formulae (7) and (7a), each L₃ is independently a bond or a linker. In particular, each L₃ may be an optionally substituted, linear or branched, C1-C6 alkylene.

In formulae (8) and (8a), each L₆ is independently a bond or a linker. In particular, each L₆ may be a bond.

### Preferred cyclohexene polyesters

The invention also relates to precursors suitable for obtaining cycloaliphatic epoxide polyester of the invention (i.e. prior to epoxidation).

One object of the present invention is a cyclohexene polyester based on:
A) a polyol component;
B) a polyacid component; and
C) a monoacid cyclohexene component;
wherein
component B) comprises more than 70% mol at least one diacid having a bridged or non-bridged cyclohexene ring based on the total number of moles of component B); and
component C) has a hydroxyl functionality of 0 and a carboxyl functionality of 1.

In particular, the cyclohexene polyester may correspond to the following structure (7b): 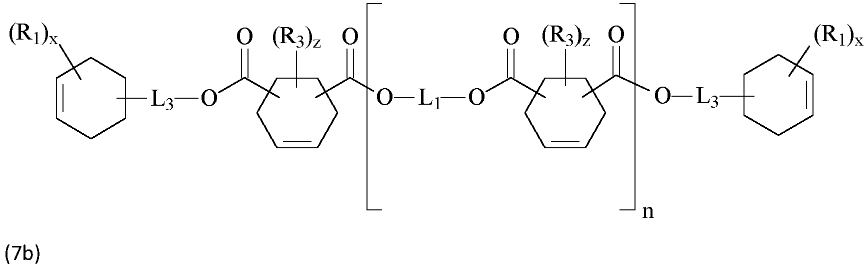 wherein L₁, L₃, R₁, R₃, n, x and z are as defined above for formula (7) and (7a).

Another object of the present invention is a cyclohexene polyester based on:
A) a polyol component;
B) a polyacid component; and
C) a monoalcohol cyclohexene component;
wherein
component B) comprises at least one diacid having a bridged or non-bridged cyclohexene ring; and
component C) has a hydroxyl functionality of 1 and a carboxyl functionality of 0.

In particular, the cyclohexene polyester may correspond to the following structure (8b): 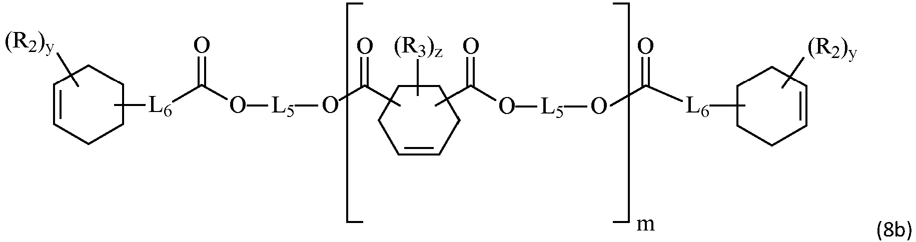 wherein L₅, L₆, R₂, R₂, m, y and z are as defined above for formula (8) and (8a).

All the preferred embodiments defined above for the cycloaliphatic epoxide polyesters equally apply to the cyclohexene polyesters.

### Compositions

The present invention also related to compositions comprising the cycloaliphatic epoxide polyester. Said compositions may in particular be cured by cationic polymerization and optionally by radical polymerization.

In a first embodiment, the composition of the present invention comprises:
a1) a cycloaliphatic epoxide polyester component according to the invention; and
b1) a cationically polymerizable component other than component a1).

The composition of the first embodiment may be referred to as a cationically polymerizable composition, i.e. a composition that is cured by cationic polymerization. Examples of suitable cationically polymerizable compounds that can be used as component b1) are further detailed below. The composition may further comprise a cationic photoinitiator component as detailed below.

In a second embodiment, the composition of the present invention comprises:
a2) a cycloaliphatic epoxide polyester component according to the invention; and
b2) a (meth)acrylate-functionalized component.

The composition of the second embodiment may be referred to as a hybrid composition, i.e. a composition that can be cured by both radical polymerization and cationic polymerization. Examples of suitable (meth)acrylate-functionalized compounds b2) are further detailed below. The composition may further comprise one or more cationically polymerizable compounds other than a2). The composition may further comprise a cationic photoinitiator as detailed below and a radical photoinitiator as detailed below.

### Cationically polymerizable composition

The cationically polymerizable composition of the invention comprises at least one cationically polymerizable component, also referred to as component b1). Component b1) is distinct from component a1).

A cationically polymerizable component is a component comprising at least one cationically polymerizable compound. A cationically polymerizable component may comprise a mixture of cationically polymerizable compounds.

The term "cationically polymerizable compound" means a compound comprising a polymerizing functional group which polymerizes via a cationic mechanism, for example a heterocyclic group or a carbon-carbon double bond substituted with an electrodonating group. In a cationic polymerization mechanism, a cationic initiator forms a Brønsted or Lewis acid species that binds to the cationically polymerizable compound which then becomes reactive and leads to chain growth by reaction with another cationically polymerizable compound.

Component b1) may comprise at least one cationically polymerizable compound selected from an epoxy-functionalized compound other than component a1), an oxetane, an oxolane, a cyclic acetal, a cyclic lactone, a thiirane, a thietane, a spiro orthoester, a spiro orthocarbonate, a vinyl ether, a vinyl ester, an alcohol, a polyol, derivatives thereof and mixtures thereof. In a preferred embodiment, component b1) may comprise at least one cationically polymerizable compound selected from vinyl ethers, epoxy-functionalized compounds, oxetanes and mixtures thereof. In a particularly preferred embodiment, component b1) comprises at least one cationically polymerizable compound selected a vinyl ether, an oxetane and mixtures thereof.

Component b1) may serve as a reactive diluent and provide high curing speed and also high solvent resistance in compositions comprising a1).

The weight ratio between component a1) and component b1) may be from 20:80 to 80:20, in particular from 30:70 to 70:30, more particularly from 40:60 to 60:40.

Suitable epoxy-functionalized compounds capable of being cationically polymerized are compounds comprising at least one epoxy group (preferably 2, 3 or 4 epoxy groups) selected from a glycidyl ether group, a glycidyl ester group, a cycloaliphatic epoxy group, an epoxy group obtained by the epoxidation of a carbon-carbon double bond and combinations thereof. Preferred epoxy-functionalized compounds comprise at least one cycloaliphatic epoxy group.

Examples of epoxy-functionalized compounds include:
- a mono-, di- or triepoxide derived from the epoxidation of a compound having one or more carbon-carbon double bonds such as 2-ethylhexyl cyclohexene carboxylate epoxide, epoxidized C-10 Alpha Olefin, epoxyoctylstearic acid, 1,2-epoxypentane, 1,2-epoxyhexane, 1,2-epoxyheptane, 1,2-epoxyoctane, 1,2-epoxydecane, 1,2-epoxydodecane, 1,2-epoxytetradecane, 1,2-epoxyhexadecane, 1,2-epoxyoctadecane, 1,2-epoxyeïcosane, 1,2-epoxycyclohexane, 1,2,3,4-diepoxybutane, 1,2,4,5-diepoxypentane, 1,2,5,6-diepoxyhexane, 1,2,7,8-diepoxyoctane, 1,2,9,10-diepoxydecane or triglycidyl isocyanurate;
- a glycidyl ether of a C4-C26 aliphatic or aromatic monoalcohol such as ethanol glycidyl ether, isopropanol glycidyl ether, butan-1-ol glycidyl ether, tert-butanol glycidyl ether, 2-ethylhexanol glycidyl ether, dodecan-1-ol glycidyl ether, phenol glycidyl ether, cresol glycidyl ether, 2-methoxyphenol glycidyl ether, p-nonylphenol glycidyl ether, 4-tert-butylphenol glycidyl ether, benzyl alcohol glycidyl ether or cardanol glycidyl ether (such as Cardolite Ultra LITE 513 commercialized by Cardolite);

- a glycidyl ester of a C4-C26 aliphatic or aromatic monocarboxylic acid such as 4-tert-butylbenzoic acid glycidyl ester, oleic acid glycidyl ester, linolenic acid glycidyl ester, palmitic acid glycidyl ester, stearic acid glycidyl ester, neodecanoic or versatic acid glycidyl ester (such as Cardura E10P commercialized by Hexion), methyl 9,10-epoxystearate, ethyl 9,10-epoxystearate, butyl 9,10-epoxystearate, 2-ethylhexyl 9,10-epoxystearate, n-octyl 9,10-epoxystearate;
- a diglycidyl ether of a C2-C26 aliphatic or aromatic diol such as ethylene glycol diglycidyl ether, 1,2- or 1,3-propylene glycol diglycidyl ether, 1,2-, 1,3- or 1,4-butanediol diglycidyl ether, 1,5-pentanediol diglycidyl ether, 1,6-hexanediol diglycidyl ether, 1,7-hexanediol diglycidyl ether, 1,8-octanediol diglycidyl ether, 1,9-nonanediol diglycidyl ether, 1,10-decanediol diglycidyl ether, 1,12-dodecanediol diglycidyl ether, 2-methyl-1,3-propanediol diglycidyl ether, neopentyl glycol diglycidyl ether, 2,2-diethyl-1,3-propane diol diglycidyl ether, 3-methyl-1,5-pentanediol diglycidyl ether, 3,3-dimethyl-1,5-pentanediol diglycidyl ether, 2,4-diethyl-1,5-pentanediol diglycidyl ether, 3,3-butylethyl-1,5-pentane diol diglycidyl ether, di-, tri- or tetra(ethylene glycol) diglycidyl ether, di-, tri- or tetra(1,2-propylene glycol) diglycidyl ether, di-, tri- or tetra(1,3-propylene glycol) diglycidyl ether, di-, tri- or tetra(1,4-butylene glycol) diglycidyl ether, a polyethylene glycol) diglycidyl ether, a polypropylene glycol) diglycidyl ether, a poly(trimethylene glycol) diglycidyl ether, a poly(tetramethylene glycol) diglycidyl ether, a polyethylene glycol-co-propylene glycol) diglycidyl ether, bisphenol A, B, F or S diglycidyl ether, hydrogenated bisphenol A, B, For S diglycidyl ether, cyclohexane diglycidyl ether, cyclohexane-1,4-dimethanol diglycidyl ether, tricyclodecane dimethanol diglycidyl ether, isosorbide diglycidyl ether, pyrocatechol diglycidyl ether, resorcinol diglycidyl ether or cardol diglycidyl ether;
- a diglycidyl ester of a C4-C26 aliphatic or aromatic dicarboxylic acid such as diglycidyl cyclohexanedicarboxylate, diglycidyl phthalate, diglycidyl terephthalate or diglycidyl isophthalate;
- a tri-, tetra-, penta- or hexaglycidyl ether of a C3-C26 aliphatic or aromatic tri-, tetra-, penta- or hexaol such as glycerol triglycidyl ether, a polyglycerol polyglycidyl ether, trimethylolmethane triglycidyl ether, trimethylolethane triglycidyl ether, trimethylolpropane triglycidyl ether, di(trimethylolpropane) tetraglycidyl ether, pentaerythritol tetraglycidyl ether, phloroglucinol triglycidyl ether, pyrogallol triglycidyl ether, tris(hydroxyphenyl)methane triglycidyl ether, or tris(hydroxyphenyl)ethane triglycidyl ether;
- an epoxy novolak resin;
- a cycloaliphatic epoxide such as 2-ethylhexyl cyclohexene carboxylate epoxide, 4-epoxycyclohexylmethyl-3',4'-epoxycyclohexanecarboxylate (UviCure S105), bis((3,4-epoxycyclohexyl)methyl) adipate (UviCure S128), 2-(3,4-epoxycyclohexyl-5,5-spiro-3,4-epoxy)cyclohexane-1,4-dioxane, bis(3,4-epoxy-6-methylcyclohexylmethyl)adipate, 3,4-epoxy-6-methylcyclohexyl-3',4'-epoxy-6'-methylcyclohexanecarboxylate, vinylcyclohexene oxide, vinylcyclohexene dioxide, limonene dioxide, bis(3,4-epoxy-6-methylcyclohexylmethyl)adipate, methylenebis(3,4-epoxycyclohexane), dicyclopentadiene diepoxide, di(3,4-epoxycyclohexylmethyl) ether of ethylene glycol, ethylenebis(3,4-epoxycyclohexanecarboxylate), epoxyhexahydrodioctylphthalate or epoxyhexahydro-di-2-ethylhexyl phthalate;
- an epoxidized vegetable oil such as epoxidized soybean oil, epoxidized castor oil, or epoxidized linseed oil;
- an epoxidized polybutadiene;
- an epoxy-functionalized polyorganosiloxane;
and combinations thereof.

Suitable oxetanes capable of being cationically polymerized include trimethylene oxide, 3,3-dimethyloxetane, 3,3-dichloromethyloxetane, 3-ethyl-3-phenoxymethyloxetane, and bis(3-ethyl-3-methyloxy)butane, 3-ethyl-3-oxetanemethanol. In a preferred embodiment, the oxetane may be according to the following formula (9): 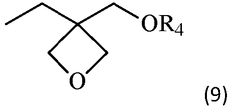 wherein R₄ is selected from H, alkyl, aryl, alkylaryl, (meth)acryloyl, -CH₂-oxetanyl-CH₂-CH₃,
-L₇-O-CH₂-oxetanyl-CH₂-CH₃;
L₇ is a divalent linker, in particular -Si(CH₃)₂-, -CH₂-Ph-Ph-CH₂- or -CH₂-Ph-CH₂-[O-CH₂-Ph-CH₂]_{f}-;
Ph is phenylene;
f is 0 to 10.

In particular, in the oxetane of formula (9) R₄ may be H, benzyl, -Si(CH₃)₂-O-CH₂-oxetanyl-CH₂-CH₃ or -CH₂-oxetanyl-CH₂-CH₃;
preferably R₄ is H or -CH₂-oxetanyl-CH₂-CH₃.

Suitable oxolanes capable of being cationically polymerized include tetrahydrofuran and 2,3-dimethyltetrahydrofuran.

Suitable cyclic acetals capable of being cationically polymerized include trioxane, 1,3-dioxolane, and 1,3,6-trioxacyclooctane.

Suitable cyclic lactones capable of being cationically polymerized include β-propiolactone and ε-caprolactone.

Suitable thiiranes capable of being cationically polymerized include ethylene sulfide, 1,2-propylene sulfide, and thioepichlorohydrin.

Suitable thietanes capable of being cationically polymerized include 3,3-dimethylthietane.

Suitable spiro orthoesters capable of being cationically polymerized are compounds obtained by the reaction of an epoxy compound and a lactone.

Suitable vinyl ethers capable of being cationically polymerized include methyl vinyl ether, ethyl vinyl ether, butyl vinyl ether, isobutyl vinyl ether, terbutyl vinyl ether, hydroxybutyl vinyl ether, ethylene glycol divinyl ether, diethylene glycol divinyl ether, triethylene glycol divinyl ether, trimethylolpropane trivinyl ether 2-vinyloxyethyl (meth)acrylate, 1-methyl-2-vinyloxyethyl (meth)acrylate, 2- or 3-vinyloxypropyl (meth)acrylate, 4-vinyloxybutyl (meth)acrylate, 2-(2-vinyloxyethoxy)ethyl (meth)acrylate, 2-(vinyloxyethoxyethoxy)ethyl (meth)acrylate.

Suitable vinyl esters capable of being cationically polymerized include vinyl acetate, vinyl formate, vinyl propionate, vinyl butyrate, vinyl isobutyrate, vinyl pivalate, vinyl pentanoate, vinyl hexanoate, vinyl octanoate, vinyl 2-ethylhexanoate, vinyl pelargonate, vinyl laurate, vinyl stearate, and vinyl versatate (i.e. esters of branched monocarboxylic acids having 6, 9, 10 or 11 carbon atoms, available under references VeoVa^{®} EH, VeoVa^{®} 9, VeoVa^{®} 10 or VeoVa^{®} 11 from Hexion).

Suitable alcohols capable of being cationically polymerized include monohydroxylated alkanes having 1 to 10 carbon atoms such as methanol, ethanol, propan-1-ol, propan-2-ol, butan-1-ol, butan-2-ol, 2-methylpropan-1-ol, 2-methylpropan-2-ol, pentan-1-ol, 2-methylbutan-1-ol, 3-methylbutan-1-ol, 2,2-dimethylpropan-1-ol, pentan-2-ol, 3-methylbutan-2-ol, pentan-3-ol, 2-methylbutan-2-ol, hexan-1-ol, hexan-2-ol, hexan-3-ol, 2-methylpentan-1-ol, 3-methylpentan-1-ol, 4-methylpentan-1-ol, 2-methylpentan-2-ol, 3-methylpentan-2-ol, 4-methylpentan-2-ol, 2-methylpentan-3-ol, 3-methylpentan-3-ol, 2,2-dimethylbutan-1-ol, 2,3-dimethylbutan-1-ol, 3,3-dimethylbutan-1-ol, 3,3-dimethylbutan-2-ol, 2-ethylbutan-1-ol, heptan-1-ol, heptan-2-ol, heptan-3-ol, heptan-4-ol, 3-ethylpentan-3-ol, octan-1-ol, octan-2-ol, octan-3-ol, octan-4-ol, 2-ethylhexyloctanol, 6-methylheptanol, nonane-1-ol, decane-1-ol, 8-methylnonan-1-ol.

Suitable polyols capable of being cationically polymerized include the polyols defined above for component A).

In a preferred embodiment, component b1) comprises at least one vinyl ether, preferably at least one polyvinylether or vinyl ether comprising a (meth)acrylate group such as ethylene glycol divinyl ether, diethylene glycol divinyl ether, triethylene glycol divinyl ether, trimethylolpropane trivinyl ether, 2-vinyloxyethyl (meth)acrylate, 1-methyl-2-vinyloxyethyl (meth)acrylate, 2- or 3-vinyloxypropyl (meth)acrylate, 4-vinyloxybutyl (meth)acrylate, 2-(2-vinyloxyethoxy)ethyl (meth)acrylate, 2-(vinyloxyethoxyethoxy)ethyl (meth)acrylate, and mixtures thereof.

In another preferred embodiment, component b1) comprises at least one oxetane, in particular at least one oxetane according to formula (9) as defined above.

In another preferred embodiment, component b1) comprises at least one epoxy-functionalized compound, in particular at least one epoxy-functionalized compound selected from a glycidyl ether, an epoxidized vegetable oil and mixtures thereof.

The composition of the invention may comprise 20 to 80%, in particular 25 to 70%, more particularly 30 to 60%, by weight of component b1) based on the total weight of the composition.

The composition may further comprise at least one cationic photoinitiator component.

A cationic photoinitiator component is a component comprising a cationic photoinitiator. A cationic photoinitiator component may comprise a mixture of cationic photoinitiators. As used herein, a cationic photoinitiator refers to a compound that is capable of initiating a cationic polymerization reaction by generating a Brønsted or Lewis acid species after exposure to a suitable light source. A cationic photoinitiator may, in particular, be an onium salt or a metallocene salt, more particularly a halonium salt, a sulfonium salt (e.g. a triarylsulfonium salt such as triarylsulfonium hexafluoroantimonate salt), a sulfoxonium salt, a diazonium salt, a ferrocene salt, and mixtures thereof.

In a preferred embodiment, the cationic photoinitiator component comprises a cationic photoinitiator selected from a sulfonium salt or an iodonium salt.

Examples of suitable sulfonium salt include ((sulfanediyldibenzene-4,1-diyl)bis(diphenylsulfonium) bis(hexafluoroantimonate) (SpeedCure^{®} 976 from Arkema) and (4-{[4-(diphenylsulfanylium)phenyl]sulfanyl} phenyl)diphenylsulfonium bishexafluorophosphate (SpeedCure^{®} 992 from Arkema), diphenyl[4-(phenylthio)phenyl]sulfonium hexafluoroantimonate (CAS 71449-78-0), diphenyl(4-phenylthio)phenylsulfonium hexafluorophosphate (CAS 68156-13-8), diphenyl[4-(phenylthio)phenyl]sulfonium tetrakis(pentafluorophenyl)borate (CAS 203573-06-2), ((sulfanediyldibenzene-4,1-diyl)bis(diphenylsulfonium) bis(pentafluorophenyl borate) (CAS 213984-72-6), sulfonium, (thiodi-4,1-phenylene)bis[bis(4-methylphenyl)-, bis[tetrakis(pentafluorophenyl)borate(1-)] (CAS 875713-04-5), 1-chloro-10-(8-chloro-9-oxo-5-propoxy-9H-thioxanthen-2-yl)-9-oxo-4-propoxy-9H-thioxanthen-10-ium hexafluorophosphate, (4-benzoylphenyl)(5,7-diethyl-9-oxo-9H-thioxanthen-2-yl)(4-methylphenyl)sulfonium hexafluorophosphate.

Examples of suitable iodonium salt include diphenyliodonium triflate, diphenyliodonium pyrenesulfonate, diphenyliodonium dodecylphenylsulfonate, diphenyliodonium hexafluoroantimonate, bis-(4-t-butylphenyl)-iodonium hexafluorophosphate, bis-(4-t-butylphenyl)-iodonium chloride, bis(4-t-butylphenyl) iodonium tetraphenylborate, bis(4-t-butylphenyl) iodonium tosylate, bis-(4-t-butylphenyl)-iodonium hexafluoroantimonate, bis(4-t-butylphenyl) iodonium pentafluorophenylborate, bis-(4-t-butylphenyl)-iodonium triflate, bis-(4-t-butylphenyl)-iodonium bis(trifluoromethane)sulfonimide, [4-(2-hydroxy-1- tetradecyloxy)-phenyl]phenyliodonium hexafluoroantimonate, [4-(2-hydroxy-1- tetradecyloxy)-phenyl]phenyliodonium hexafluorophosphate, 4-isopropyl-4'-methyldiphenyliodonium tetrakis(pentafluorophenyl)borate, preferably bis-(4-t-butylphenyl)-iodonium hexafluorophosphate.

The composition may comprise from 0.01 to 10%, from 0.1 to 9%, from 0.2 to 8%, from 0.5 to 7% or from 1 to 6%, by weight of cationic photoinitiator component based on the total weight of the composition.

### Hybrid composition

The hybrid composition of the invention comprises at least one (meth)acrylate-functionalized component, also referred to as component b2).

A (meth)acrylate-functionalized component is a component comprising at least one (meth)acrylate-functionalized compound. A (meth)acrylate-functionalized component may comprise a mixture of (meth)acrylate-functionalized compounds.

As used herein, the term "(meth)acrylate-functionalized compound" means a compound comprising at least one (meth)acrylate group. The term "(meth)acrylate group" encompasses acrylate groups (-O-CO-CH=CH₂) and methacrylate groups (-O-CO-C(CH₃)=CH₂). The term "(meth)acrylate-functionalized compound" here encompasses compounds containing more than one (meth)acrylate group, such as 2, 3, 4, 5 or 6 (meth)acrylate groups.

Component b2) may comprise at least one (meth)acrylate-functionalized compound selected from a (meth)acrylate-functionalized monomer, a (meth)acrylate-functionalized oligomer and mixtures thereof. In particular, component b2) comprises a (meth)acrylate functionalized monomer and optionally a (meth)acrylate-functionalized oligomer.

According to some embodiments, component b2) comprises a (meth)acrylate-functionalized monomer. Component b2) may comprise a mixture of (meth)acrylate-functionalized monomers.

A (meth)acrylate-functionalized monomer may have a molecular weight of less than 600 g/mol, in particular from 100 to 550 g/mol, more particularly 200 to 500 g/mol.

A (meth)acrylate-functionalized monomer may have 1 to 6 (meth)acrylate groups, in particular 1 to 3 (meth)acrylate groups.

Component b2) may comprise a mixture of (meth)acrylate-functionalized monomers having different functionalities. For example component b2) may comprise a mixture of a (meth)acrylate-functionalized monomer containing a single acrylate or methacrylate group per molecule (referred to herein as "mono(meth)acrylate-functionalized monomers") and a (meth)acrylate-functionalized monomer containing 2 or more, preferably 2 to 6, acrylate and/or methacrylate groups per molecule (referred to herein as "poly(meth)acrylate-functionalized monomer").

Component b2) may comprise or consist of a mono(meth)acrylate-functionalized monomer.

Examples of suitable mono(meth)acrylate-functionalized monomers include, but are not limited to, mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and mixtures thereof.

The following compounds are specific examples of mono(meth)acrylate-functionalized monomers suitable for use in component b2): methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; phenol (meth)acrylates; nonylphenol (meth)acrylates; benzyl (meth)acrylate, cyclic trimethylolpropane formal (meth)acrylate; (2,2-dimethyl-1,3-dioxolan-4-yl)methyl (meth)acrylate; (2-ethyl-2-methyl-1,3-dioxolan-4-yl)methyl (meth)acrylate; glycerol formal methacrylate; isobornyl (meth)acrylate; tricyclodecanemethanol (meth)acrylate; tert-butylcyclohexyl (meth)acrylate; trimethylcyclohexyl (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; a caprolactone mono(meth)acrylate; as well as the alkoxylated (i.e. ethoxylated and/or propoxylated) derivatives thereof; and combinations thereof.

Component b2) may comprise or consist of a poly(meth)acrylate-functionalized monomer.

Examples of suitable poly(meth)acrylate-functionalized monomers include acrylate and methacrylate esters of polyols selected from ethylene glycol, di-, tri- or tetraethylene glycol, 1,2- or 1,3-propylene glycol, di-, tri- or tetra(1,2-propylene glycol), di-, tri- or tetra(1,3-propylene glycol), 1,2-, 1,3- or 1,4-butylene glycol, di-, tri- or tetra(1,4-butylene glycol), 1,5-pentanediol, 1,6-hexanediol, 1,7-heptanediol, 1,8-octanediol, 1,9-nonanediol, 1,10-decanediol, 1,12-dodecanediol, 2-methyl-1,3-propanediol, 2,2-dimethyl-1,3-propanediol, 2,2-diethyl-1,3-propanediol, 2-methyl-2-ethyl-1,3-propanediol, 3-methyl-1,5-pentanediol, 3,3-dimethyl-1,5-pentanediol, 2,4-diethyl-1,5-pentanediol, 3-butyl-3-ethyl-1,5-pentane diol, 2,2,4-trimethyl 1,5-pentanediol, cyclohexanediol, cyclohexane-1,4-dimethanol, norbornene dimethanol, norbornane dimethanol, tricyclodecanediol, tricyclodecane dimethanol, hydrogenated bisphenol A, B, F or S, a dianhydrohexitol (i.e. isosorbide, isomannide, isoidide), as well as the alkoxylated (i.e. ethoxylated and/or propoxylated) derivatives thereof; and mixtures thereof. Such polyols may be fully or partially esterified (with (meth)acrylic acid, (meth)acrylic anhydride, (meth)acryloyl chloride or the like), provided they contain at least two (meth)acrylate functional groups per molecule.

Exemplary poly(meth)acrylate-functionalized monomers may include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-decanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; a non-alkoxylated isosorbide di(meth)acrylate; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate; sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; a urethane di(meth)acrylate monomer (i.e. the reaction product of a diisocyanate and a hydroxyalkyl (meth)acrylate); as well as the alkoxylated (i.e. ethoxylated and/or propoxylated) derivatives thereof; and mixtures thereof; and mixtures thereof.

In a particularly preferred embodiment, component b2) comprises at least one (meth)acrylate-functionalized monomer selected from glyceryl tri(meth)acrylate, trimethylolpropane tri(meth)acrylate, pentaerythritol tetra(meth)acrylate as well as the alkoxylated (i.e. ethoxylated and/or propoxylated) derivatives thereof; and mixtures thereof; and mixtures thereof.

Component b2) may comprise 0 to 100%, in particular 5 to 99%, more particularly 10 to 95%, even more particularly 15 to 90%, more particularly still 20 to 85% by weight of (meth)acrylate-functionalized monomer based on the total weight of the component b2). In particular, component b2) may comprise 0 to 50% or 5 to 50% or 10 to 50% or 15 to 50% or 20 to 50% or 25 to 50%, by weight of (meth)acrylate-functionalized monomer based on the total weight of component b2). Alternatively, component b2) may comprise 50 to 100% or 55 to 100% or 60 to 100% or 65 to 100% or 70 to 100%, by weight of (meth)acrylate-functionalized monomer based on the total weight of component b2).

According to some embodiments, component b2) comprises a (meth)acrylate-functionalized oligomer. Component b2) may comprise a mixture of (meth)acrylate-functionalized oligomers.

A (meth)acrylate-functionalized oligomer may be selected in order to enhance the flexibility, strength and/or modulus, among other attributes, of a cured polymer prepared by curing the composition of the invention.

A (meth)acrylate functionalized oligomer may have 1 to 18 (meth)acrylate groups, in particular 2 to 6 (meth)acrylate groups, more particularly 2 to 6 acrylate groups.

A (meth)acrylate functionalized oligomer may have a number average molecular weight equal or more than 600 g/mol, in particular 800 to 15,000 g/mol, more particularly 1,000 to 5,000 g/mol.

In particular, component b2) may comprise a (meth)acrylate-functionalized oligomer selected from the group consisting of epoxy (meth)acrylates, polyester (meth)acrylates, polyether (meth)acrylates, urethane (meth)acrylates, (meth)acrylated poly(meth)acrylates and mixtures thereof.

Non-limiting examples of epoxy (meth)acrylates are the reaction products of an epoxy-functionalized compound (such as glycidyl ethers, glycidyl esters, cycloaliphatic epoxides or epoxides obtained by epoxidation of mono- and/or poly-ethylenically unsaturated compounds) with a (meth)acrylating agent (such as (meth)acrylic acid, (meth)acrylic anhydride, (meth)acryloyl chloride or combinations thereof). The epoxy-functionalized compound may be as described above for the cationically polymerizable compound b1).

Non-limiting examples of polyester (meth)acrylates are the reaction products of a hydroxyl group-terminated polyester polyol with a (meth)acrylating agent (such as (meth)acrylic acid, (meth)acrylic anhydride, (meth)acryloyl chloride or combinations thereof). The reaction process may be conducted such that a significant concentration of residual hydroxyl groups remain in the polyester (meth)acrylate or may be conducted such that all or essentially all of the hydroxyl groups of the polyester polyol have been (meth)acrylated. The polyester polyols can be made by polycondensation reactions of a polyhydroxyl functional component (in particular a diol) and a polycarboxylic acid functional compound (in particular, a dicarboxylic acid or anhydride). To prepare the polyester (meth)acrylates, the hydroxyl groups of the polyester polyol are then partially or fully esterified by reacting with the (meth)acrylating agent. Polyester (meth)acrylates may also be synthesized by reacting a hydroxyl-containing (meth)acrylate such as a hydroxyalkyl (meth)acrylate (e.g., hydroxyethyl acrylate) with a polycarboxylic acid. The polyhydroxyl functional and polycarboxylic acid functional components can each have linear, branched, cycloaliphatic or aromatic structures and can be used individually or as mixtures.

Non-limiting examples of polyether (meth)acrylates are the condensation reaction products of a polyetherol which is a polyether polyol with a (meth)acrylating agent (such as (meth)acrylic acid, (meth)acrylic anhydride, (meth)acryloyl chloride or combinations thereof). Suitable polyetherols can be linear or branched substances containing ether bonds and terminal hydroxyl groups. Polyetherols can be prepared by ring opening polymerization of epoxides and other oxygen-containing heterocyclic compounds (e.g., ethylene oxide, 1,2-propylene oxide, butene oxide, tetrahydrofuran and combinations thereof) with a starter molecule. Suitable starter molecules include water, hydroxyl functional materials, polyester polyols and amines. Polyetherols may also be obtained by the condensation of diols such as glycols.

Non-limiting examples of urethane (meth)acrylates are the condensation reaction products of at least one polyisocyanate (e.g., diisocyanate, triisocyanate), at least one polyol (such as a polyether polyol or a polyester polyol) and a hydroxy-functional (meth)acrylate (such as 2-hydroxyethyl (meth)acrylate and/or 2-, or 3-hydroxypropyl (meth)acrylate) to provide terminal (meth)acrylate groups. For example, the urethane (meth)acrylate may contain two, three, four or more (meth)acrylate groups per molecule. The order of addition of the components to prepare the urethane (meth)acrylate is well known in the art. For example, the hydroxyl-functionalized (meth)acrylate may be first reacted with the polyisocyanate to obtain an isocyanate-functionalized (meth)acrylate, which is then reacted with the polyol. In yet another embodiment, the polyisocyanate may be first reacted with the polyol to obtain an isocyanate-functionalized polyol, which is thereafter reacted with a hydroxyl-functionalized (meth)acrylate. Alternatively, all the components may be combined and reacted at the same time.

Non-limiting examples of (meth)acrylated poly(meth)acrylates are substances having an oligomeric (meth)acrylic backbone which is functionalized with one or (meth)acrylate groups (which may be at a terminus of the oligomer or pendant to the acrylic backbone). The (meth)acrylic backbone may be a homopolymer, random copolymer or block copolymer comprised of repeating units of (meth)acrylic monomers. The (meth)acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. (Meth)acrylated poly(meth)acrylates may be prepared using any procedures known in the art, such as by oligomerizing (meth)acrylic monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized poly(meth)acrylate, which is then reacted with one or more (meth)acrylate-containing reactants to introduce the desired (meth)acrylate functional groups.

Component b2) may comprise 0 to 100 wt.%, in particular 10 to 95 wt.%, more particularly 20 to 90 wt.%, even more particularly 25 to 85 wt.%, more particularly still 30 to 80 wt.% of (meth)acrylate-functionalized oligomer, based on the total weight of the component b2). In particular, component b2) may comprise 0 to 50 wt.% or 0 to 45 wt.% or 0 to 40 wt.% or 0 to 35 wt.% or 0 to 30 wt.%, of (meth)acrylate-functionalized oligomer, based on the total weight of component b2).

The composition of the invention may comprise 10 to 80%, in particular 15 to 75%, more particularly 20 to 70%, by weight of component b2) based on the total weight of the composition.

The composition may further comprise a cationic photoinitiator component as defined above for the cationically polymerizable composition.

The composition may further comprise a radical photoinitiator component.

A radical photoinitiator component comprises or consists of at least one radical photoinitiator. A radical photoinitiator component may comprise a mixture of radical photoinitiators.

Radical photoinitiators are compounds that can generate free radicals upon exposure to light of an appropriate wavelength and/or intensity. Radical photoinitiators can adopt two different modes of action, and are classified by mode of action as Norrish Type I and Norrish Type II photoinitiators. As used herein, the term "activity" with reference to Norrish Type I and Norrish Type II activity is intended to relate to Norrish photoinitiation and analogous reactions. For instance, a radical photoinitiator having Norrish Type I activity within the scope of this invention would be a photoinitiator characterized by a cleavage reaction into two radical fragments of the original photoinitiator on exposure to light. For an initiator having Norrish Type II activity, exposure to light causes the abstraction of an atom, such as hydrogen, to generate the radical.

The radical photoinitiator component may comprise one or more photoinitiators having Norrish type I activity and/or Norrish type II activity.

Non-limiting types of photoinitiators suitable for use in the compositions of the present invention include, for example, benzoins, benzoin ethers, acetophenones, α-hydroxy acetophenones, benzyl, benzyl ketals, anthraquinones, phosphine oxides, acylphosphine oxides, α-hydroxyketones, phenylglyoxylates, α-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable photoinitiators include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, α-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric α-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

In particular, the radical photoinitiator component may comprise a photoinitiator selected from a benzophenone such as SpeedCure^{®} BP (benzophenone), SpeedCure^{®} 7005 (polymeric benzophenone), SpeedCure^{®} 7006 (polymeric benzophenone), SpeedCure^{®} EMK (4,4'-bis(diethylamino)benzophenone) or SpeedCure^{®} BMS (4-benzoyl-4'-methyldiphenyl sulphide); a thioxanthone such as SpeedCure^{®} 7010 (polymeric thioxanthone), SpeedCure^{®} ITX (isopropyl thioxanthone), SpeedCure^{®} DETX (2,4-diethylthioxanthone) or SpeedCure^{®} CPTX (1-chloro-4-propoxythioxanthone); an α-hydroxy acetophenone; an acylphosphine oxide such as SpeedCure^{®} BPO (phenyl bis(2,4,6-trimethylbenzoyl)-phosphine oxide), SpeedCure^{®} TPO (2,4,6-trimethylbenzoyldiphenylphosphine oxide) or SpeedCure^{®} TPO-L (ethyl (2,4,6-trimethylbenzoyl)phenyl phosphinate); a phenylglyoxylate such as SpeedCure^{®} MBF (methylbenzoylformate); and mixtures thereof.

In a preferred embodiment, the radical photoinitiator component comprises a Norrish type ! radical photoinitiator, more particularly a phosphine oxide or an acetophenone.

In another preferred embodiment, the radical photoinitiator component comprises a Norrish type II radical photoinitiator, more particularly a thioxanthone.

The composition may comprise from 0.01% to 5%, from 0.02% to 3%, from 0.05 to 2%, from 0.1 to 1.5% or from 0.2 to 1%, by weight of radical photoinitiator component based on the total weight of the composition.

### Additive component

The compositions of the present invention may further comprise an additive component.

An additive component comprises or consists of an additive. An additive component may comprise a mixture of additives.

In particular, the additive component may comprise an additive selected from a sensitizer, an amine synergist, an antioxidant/photostabilizer, a light blocker/absorber, a polymerization inhibitor, a foam inhibitor, a flow/leveling agent, a colorant, a pigment, a dispersant (wetting agent, surfactant), a slip additive, a filler, a chain transfer agent, a thixotropic agent, a matting agent, an impact modifier, a wax, mixtures thereof, and any other additive conventionally used in the ink, coating, sealant, adhesive, molding or 3D printing arts.

The additive component may comprise a sensitizer.

Sensitizers may be introduced in the composition of the present invention in order to extend the sensitivity of the radical photoinitiator to longer wavelengths. For example, the sensitizer may absorb light at longer or shorter wavelengths than the photoinitiator and be capable of transferring the energy to the photoinitiator and revert to its ground state.

Examples of suitable sensitizers include anthracenes and carbazoles.

The concentration of sensitizer in the composition will vary depending on the photoinitiator that is used. Typically, however, the composition is formulated to comprise from 0% to 5%, in particular 0.1% to 3%, more particularly 0.5 to 2%, by weight of sensitizer based on the total weight of the composition.

The additive component may comprise a chain-transfer agent.

Chain-transfer agents may be introduced in the composition of the present invention in order to increase the curing speed. In particular, the chain-transfer agent may be a polyol. Polythiols or polyamines may slow down cationic cure and are not a preferred choice in the present invention. The additive component may comprise a stabilizer.

Stabilizers may be introduced in the composition of the present invention in order to provide adequate storage stability and shelf life. Advantageously, one or more such stabilizers are present at each stage of the method used to prepare the composition, to protect against unwanted reactions during processing of the ethylenically unsaturated components of the composition. As used herein, the term "stabilizer" means a compound or substance which retards or prevents reaction or curing of actinically-curable functional groups present in a composition in the absence of actinic radiation. However, it will be advantageous to select an amount and type of stabilizer such that the composition remains capable of being cured when exposed to actinic radiation (that is, the stabilizer does not prevent radiation curing of the composition). Typically, effective stabilizers for purposes of the present invention will be classified as free radical stabilizers (i.e., stabilizers which function by inhibiting free radical reactions).

Any of the stabilizers known in the art related to (meth)acrylate-functionalized compounds may be utilized in the present invention. Quinones represent a particularly preferred type of stabilizer which can be employed in the context of the present invention. As used herein, the term "quinone" includes both quinones and hydroquinones as well as ethers thereof such as monoalkyl, monoaryl, monoaralkyl and bis(hydroxyalkyl) ethers of hydroquinones. Hydroquinone monomethyl ether is an example of a suitable stabilizer which can be utilized. Other stabilizers known in the art such as BHT and derivatives, phosphite compounds, phenothiazine (PTZ), triphenyl antimony and tin (II) salts can also be used.

The concentration of stabilizer in the composition will vary depending upon the particular stabilizer or combination of stabilizers selected for use and also on the degree of stabilization desired and the susceptibility of components in the compositions towards degradation in the absence of stabilizer. Typically, however, the composition is formulated to comprise from 5 to 5000 ppm stabilizer. According to certain embodiments of the invention, the reaction mixture during each stage of the method employed to make the composition contains at least some stabilizer, e.g., at least 10 ppm stabilizer.

The composition may comprise a light blocker (sometimes referred to as a light absorber).

The introduction of a light blocker is particularly advantageous when the composition is to be used as a resin in a three-dimensional printing process involving photocuring of the composition. The light blocker may be any such substances known in the three-dimensional printing art, including for example non-reactive pigments and dyes. The light blocker may be a visible light blocker or a UV light blocker, for example. Examples of suitable light blockers include, but are not limited to, titanium dioxide, carbon black and organic ultraviolet light absorbers such as hydroxybenzophenone, hydroxyphenylbenzotriazole, oxanilide, hydroxyphenyltriazine, Sudan !, bromothymol blue, 2,2'-(2,5-thiophenediyl)bis(5-tert-butylbenzoxazole) (sold under the brand name "Benetex OB Plus") and benzotriazole ultraviolet light absorbers.

The amount of light blocker may be varied as may be desired or appropriate for particular applications. Generally speaking, if the composition contains a light blocker, it is present in a concentration of from 0.001 to 10 % by weight based on the weight of the composition.

### Solvent component

The compositions of the invention may comprise a solvent component. A solvent component is a component comprising or consisting of one or more solvents. As used herein, the term "solvent" means a non-reactive organic solvent, i.e. a solvent that does not react with the other components of the composition.

Examples of suitable solvents include aliphatic hydrocarbons such n-pentane, n-hexane, n-heptane, octane cyclohexane or methylcyclohexane; aromatic hydrocarbons such as benzene toluene or xylene; halogenated hydrocarbons such as dichloromethane, chloroform or trichlororethane; ketones such as acetone, methyl ethyl ketone, methyl propyl ketone, diethylketone, methylisobutylketone, ethyl butyl ketone, cyclopentanone or cyclohexanone; esters such as methyl formate, butyl formate, methyl acetate, ethyl acetate, propyl acetate or butyl acetate; ethers such as diethyl ether, diisopropyl ether, dibutyl ether, ethylene glycol diethyl ether, tetrahydrofuran or tetrahydropyrane; carbonates such as diethylcarbonate; and combinations thereof.

Advantageously, the composition of the present invention may be formulated to be substantially free of a solvent. For example, the composition may contain little or no solvent, e.g., less than 10 wt.%, or less than 5 wt.%, or less than 1 wt.%, or even 0 wt.% of solvent, based on the total weight of the composition.

According to some embodiments, the composition is a liquid at 25°C. In various embodiments of the invention, the compositions described herein are formulated to have a viscosity of less than 10,000 mPa.s, or less than 5,000 mPa.s, or less than 1,000 mPa.s, or less than 500 mPa.s, or less than 250 mPa.s, or even less than 100 mPa.s as measured at 25°C using a Brookfield viscometer, model DV-II, using a 27 spindle (with the spindle speed varying typically between 20 and 200 rpm, depending on viscosity). In advantageous embodiments of the invention, the viscosity of the composition is from 10 to 10,000 mPa.s, or from 10 to 5,000 mPa.s, or from 10 to 1,000 mPa.s, or from 10 to 500 mPa.s, or from 10 to 250 mPa.s, or from 10 to 100 mPa.s at 25°C.

### End uses

The compositions described herein may be compositions that are to be subjected to curing by means of radical polymerization, cationic polymerization or other types of polymerization. In particular embodiments, the compositions are photocured (i.e., cured by exposure to actinic radiation such as UV, near-UV, visible, infrared, near-infrared radiation).

The composition of the invention may be an ink, coating, sealant, adhesive, molding, or 3D printing composition, in particular a coating composition, more particularly a metal coating composition . Due to their low migration properties and reduced toxicity, the compositions of the invention may be of particular interest in food packaging applications, personal care applications, water or food processing applications and biomedical applications.

The composition according to the invention may in particular be used to obtain a cured product. The present invention thus also relates to the use of the composition of the present invention as an ink, a coating, an adhesive, a sealant, a molding, or a 3D-printing composition, in particular as a coating composition, more particularly as a metal coating composition.

The present invention also relates to a method of using the composition described herein as an ink, a coating, an adhesive, a sealant, a molding, or a 3D-printing composition, in particular as a coating composition, more particularly as a metal coating composition.

### Cured product and preparation process

The present invention also relates to a process for the preparation of a cured product. The process for the preparation of a cured product according to the invention comprises curing the composition of the invention. Thus, the cured product may be deemed as the reaction product of the composition, formed by curing.

In particular, the composition may be cured by exposing the composition to radiation. More particularly, the composition may be cured by exposing the composition to UV, near-UV, visible, infrared, near-infrared and/or electron beam radiation.

Curing may be accelerated or facilitated by supplying energy to the composition, such as by heating the composition. A composition may be partially cured by exposure to actinic radiation, with further curing being achieved by heating the partially cured article. For example, an article formed from the composition may be heated at a temperature of from 40°C to 120°C for a period of time of from 5 minutes to 12 hours.

Prior to curing, the composition may be applied to a substrate surface in any known conventional manner, for example, by spraying, knife coating, roller coating, casting, drum coating, dipping, and the like and combinations thereof. Indirect application using a transfer process may also be used.

The substrate on which the composition is applied and cured may be any kind of substrate. Suitable substrates are detailed below. When used as an adhesive, the composition may be placed between two substrates and then cured, the cured composition thereby bonding the substrates together to provide an adhered article. Compositions in accordance with the present invention may also be cured in a bulk manner (e.g., the composition may be cast into a suitable mold and then cured).

The substrate may be a ceramic, metallic, mineral, cellulosic, animal-based or polymeric substrate.

The substrate may be porous or substantially non-porous. The substrate may be transparent, translucent, or opaque.

Examples of ceramic substrates include alumina-based ceramics and zirconia-based ceramics. Examples of metallic substrates include titanium, gold, silver, copper, brass, steel and bronze. Examples of mineral substates include glass, asbestos and basalt.

Examples of cellulosic substrates include plain paper or resin coated paper (e.g. polyethylene or polypropylene coated paper). There is no real limitation on the type of paper and it includes newsprint paper, magazine paper, office paper, wallpaper but also paper of higher grammage, usually referred to as boards, such as white lined chipboard, corrugated board and packaging board. Further examples of cellulosic substrates include bamboo, cotton, flax, hemp, jute, lyocell, modal, rayon, raffia, ramie and sisal.

Examples of cellulosic substrates include wool, fur, silk and leather.

Examples of polymeric substrates include polyethylene, polypropylene, polycarbonate, polyvinyl chloride, polyethylene terephthalate, polyethylene naphthalate, polylactide, polyamide, polyimide, polyacrylonitrile, polyurethane, acrylonitrile butadiene styrene.

There is no restriction on the shape of the substrate. It can be a sheet, a film, a non-woven or woven fiber mat or a three dimensional object.

In particular, the substrate may be selected from a food and beverage packaging, a pharmaceutical packaging, a textile, a tooth, a medical device, a food and beverage processing equipment, a water pipe.

The present invention also relates to a cured product obtained by curing the composition of the present invention.

The present invention also relates to cured products comprising the cured composition of the present invention.

The cured product may be an ink, a coating, a sealant, an adhesive, a molded article or a 3D-printed article, in particular an ink or a coating, more particularly a metal coating.

### Uses

The cycloaliphatic epoxide polyester the invention may be used to obtain an ink, a coating, a sealant, an adhesive, a molded article or a 3D-printed article, in particular an ink or a coating, more particularly a metal coating.

Within this specification, embodiments have been described in a way which enables a clear and concise specification to be written, but it is intended and will be appreciated that embodiments may be variously combined or separated without departing from the invention. For example, it will be appreciated that all preferred features described herein are applicable to all aspects of the invention described herein.

In some embodiments, the invention herein can be construed as excluding any element or process step that does not materially affect the basic and novel characteristics of the invention. Additionally, in some embodiments, the invention can be construed as excluding any element or process step not specified herein.

Although the invention is illustrated and described herein with reference to specific embodiments, the invention is not intended to be limited to the details shown. Rather, various modifications may be made in the details within the scope and range of equivalents of the claims and without departing from the invention.

### ASPECTS

The invention may be as defined in any one of the following Aspects:
Aspect 1. A cycloaliphatic epoxide polyester obtained by epoxidizing a cyclohexene polyester based on:
   A) a polyol component;
   B) a polyacid component; and
   C) a monoalcohol or monoacid cycloalkene component;
   wherein component C) has a hydroxyl functionality of 0 or 1, a carboxyl functionality of 0 or 1 and a hydroxyl + carboxyl functionality of 1.
Aspect 2. The cycloaliphatic epoxide polyester according to Aspect 1, wherein the cycloaliphatic epoxide polyester bears at least two cycloaliphatic epoxide moieties, preferably at least three cycloaliphatic epoxide moieties.
Aspect 3. The cycloaliphatic epoxide polyester according to Aspect 1 or 2, wherein the epoxidation is carried out with a peracid such as 3-chloroperbenzoic acid or peracetic acid, or with another epoxidation agent such as hydrogen peroxide, t-butyl hydroperoxide or sodium hypochlorite.
Aspect 4. The cycloaliphatic epoxide polyester, according to any one of Aspects 1 to 3, wherein component A) comprises an ethylenically unsaturated polyol and/or component B) comprises an ethylenically unsaturated polyacid, preferably component B) comprises an ethylenically unsaturated polyacid.
Aspect 5. The cycloaliphatic epoxide polyester according to any one of Aspects 1 to 4, wherein component A) has a hydroxyl functionality of 2 to 6, preferably from 2 to 4, more preferably from 2 to 3, even more preferably 2.
Aspect 6. The cycloaliphatic epoxide polyester according to any one of Aspects 1 to 5, wherein component A) comprises:
   A1) a diol component; and
   A2) optionally a branching polyol component.
Aspect 7. The cycloaliphatic epoxide polyester according to Aspect 6, wherein component A1) comprises at least one diol selected from the group consisting of neopentyl glycol, ethylene glycol, diethylene glycol, 1,2- or 1,3-propanediol, 1,2-, 1,3- or 1,4-butanediol, 1,5-pentanediol, 1,6-hexanediol, as well as the alkoxylated derivatives thereof, and combinations thereof.
Aspect 8. The cycloaliphatic epoxide polyester according to Aspects 1 to 7, wherein component A) represents from 5 to 60%, preferably from 10 to 50%, of the total number of moles of components A) + B) + C).
Aspect 9. The cycloaliphatic epoxide polyester according to any one of Aspects 1 to 8, wherein component B) has a carboxyl functionality of 2 to 4, preferably from 2 to 3, more preferably 2.
Aspect 10. The cycloaliphatic epoxide polyester according to any one of Aspects 1 to 9, wherein component B) comprises:
   B1) a diacid component; and
   B2) optionally a branching polyacid component.
Aspect 11. The cycloaliphatic epoxide polyester according to Aspect 10, wherein component B1) comprises at least one saturated or ethylenically unsaturated cycloaliphatic diacid, preferably at least one ethylenically unsaturated cycloaliphatic diacid.
Aspect 12. The cycloaliphatic epoxide polyester according to Aspects 10 or 11, wherein component B1) comprises at least one diacid having a bridged or non-bridged cyclohexene ring, preferably component B) comprises at least one diacid selected from tetrahydrophthalic acid, tetrahydrophthalic anhydride, methyltetrahydrophthalic acid, methyltetrahydrophthalic anhydride, norbornene dicarboxylic acid, norbornene dicarboxylic anhydride, and mixtures thereof.
Aspect 13. The cycloaliphatic epoxide polyester according to any one of Aspects 1 to 12, wherein component B) represents from 5 to 50%, preferably from 10 to 40%, of the total number of moles of components A) + B) + C).
Aspect 14. The cycloaliphatic epoxide polyester according to any one of Aspects 1 to 13, wherein component C) comprises at least one bridged or non-bridged monoalcohol cyclohexene, preferably at least one non-bridged monoalcohol cyclohexene.
Aspect 15. The cycloaliphatic epoxide polyester according to Aspect 14, wherein the monoalcohol cyclohexene is selected from 3-cyclohexene-1-ol, 4-cyclohexene-1-ol, 3-cyclohexene-1-methanol, 6-methyl-3-cyclohexene-1-methanol, 3-methyl-3-cyclohexene-1-methanol, 4-methyl-3-cyclohexene-1-methanol, 4,6-dimethyl-3-cyclohexene-1-methanol, 2-butyl-3-cyclohexene-1-methanol, 6-ethyl-3-cyclohexene-1-methanol, 1-methyl-3-cyclohexene-1-methanol, 1-ethyl-3-cyclohexene-1-methanol, 3,6-dimethyl-3-cyclohexene-1-methanol, 4,6-dimethyl-3-cyclohexene-1-methanol, 3-phenyl-3-cyclohexene-1-methanol, 6-phenyl-3-cyclohexene-1-methanol, 2,5-dimethyl-2-phenyl-3-cyclohexene-1-methanol, 5-norbornene-2-methanol and mixtures thereof.
Aspect 16. The cycloaliphatic epoxide polyester according to any one of Aspects 1 to 13, wherein component C) comprises at least one bridged or non-bridged monoacid cyclohexene, preferably at least one non-bridged monoacid cyclohexene.
Aspect 17. The cycloaliphatic epoxide polyester according to Aspect 16, wherein the monoacid cyclohexene is selected from 2-cyclohexene-1-carboxylic acid, 3-cyclohexene-1-carboxylic acid, 6-methyl-3-cyclohexene-1-carboxylic acid, 4-methyl-3-cyclohexene-1-carboxylic acid, 5-norbornene-2-carboxylic acid, 5-norbornene-2-acetic acid and mixtures thereof.
Aspect 18. The cycloaliphatic epoxide polyester according to any one of Aspects 1 to 17, wherein component C) represents from 20 to 70%, preferably from 30 to 60%, of the total number of moles of components A) + B) + C).
Aspect 19. The cycloaliphatic epoxide polyester according to any one of Aspects 1 to 18, wherein the cyclohexene polyester has an acid number from 0.0 to 5.0 mg KOH/g, preferably from 0.0 to 2.0 mg KOH/g, more preferably from 0.0 to 0.50 mg KOH/g.
Aspect 20. The cycloaliphatic epoxide polyester according to any one of Aspects 1 to 15 and 18, wherein the cycloaliphatic epoxide polyester is according to the following structure (7): 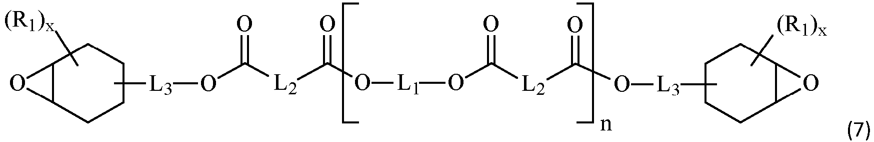 wherein
   each L₁ is independently the residue of a diol;
   each L₂ is independently the residue of a diacid or a derivative thereof;
   each L₃ is independently a bond or a linker;
   each R₁ is independently selected from alkyl or aryl or two R₁ groups may form an alkylene bridge.
   n is from 1 to 20
   each x is independently from 0 to 4.
Aspect 21. The cycloaliphatic epoxide polyester according to Aspect 20, wherein the cycloaliphatic epoxide polyester is according to the following structure (7a): 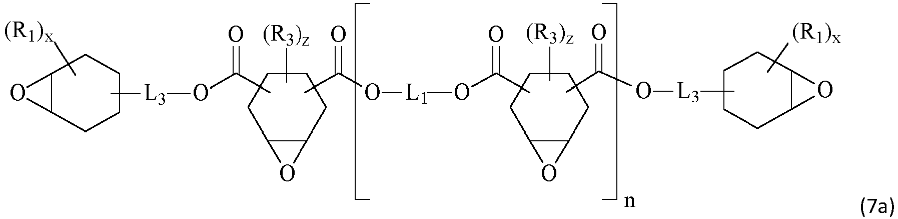 wherein
   L₁, L₃, R₁, n and x are as defined in Aspect 20;
   each R₃ is independently selected from alkyl or aryl or two R₃ groups may form an alkylene bridge;
   each z is independently from 0 to 4.
Aspect 22. The cycloaliphatic epoxide polyester according to any one of Aspects 1 to 13 and 16 to 18, wherein the cycloaliphatic epoxide polyester is according to the following structure (8): 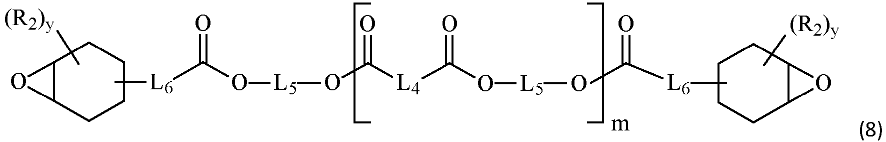 wherein
   each L₄ is independently the residue of a diacid or a derivative thereof;
   each L₅ is independently the residue of a diol;
   each L₆ is independently a bond or a linker;
   each R₂ is independently selected from alkyl or aryl or two R₁ groups may form an alkylene bridge.
   m is from 1 to 20
   each y is independently from 0 to 4.
Aspect 23. The cycloaliphatic epoxide polyester according to Aspect 22, wherein the cycloaliphatic epoxide polyester is according to the following structure (8a): 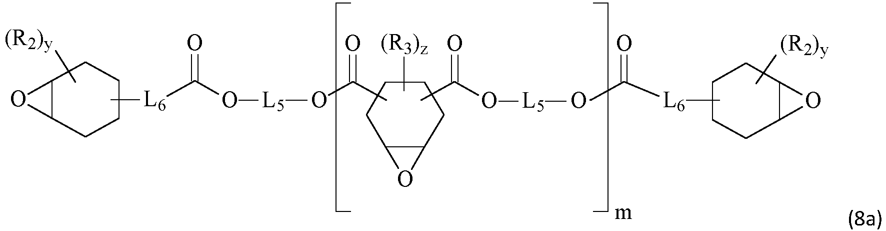 wherein
   L₅, L₆, R₂, m and y are as defined in Aspect 22;
   each R₃ is independently selected from alkyl or aryl or two R₃ groups may form an alkylene bridge;
   each z is independently from 0 to 4.
Aspect 24. A cyclohexene polyester based on:
   A) a polyol component;
   B) a polyacid component; and
   C) a monoacid cyclohexene component;
   wherein
   component B) comprises more than 70% mol at least one diacid having a bridged or non-bridged cyclohexene ring based on the total number of moles of component B); and
   component C) has a hydroxyl functionality of 0 and a carboxyl functionality of 1.
Aspect 25. The cyclohexene polyester of Aspect 24, wherein the cyclohexene polyester corresponds to the following structure (7b): 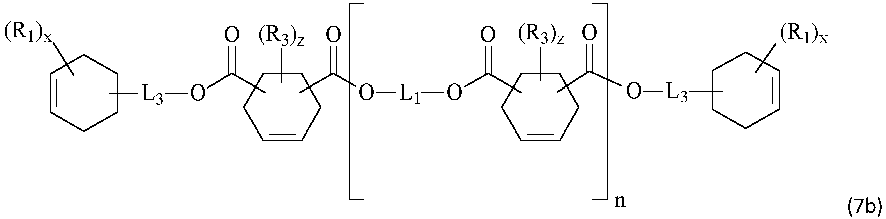 wherein L₁, L₃, R₁, R₃, n, x and z are as defined in Aspect 20 and 21.
Aspect 26. A cyclohexene polyester based on:
   A) a polyol component;
   B) a polyacid component; and
   C) a monoalcohol cyclohexene component;
   wherein
   component B) comprises at least one diacid having a bridged or non-bridged cyclohexene ring; and
   component C) has a hydroxyl functionality of 1 and a carboxyl functionality of 0.
Aspect 27. The cyclohexene polyester of Aspect 26, wherein the cyclohexene polyester corresponds to the following structure (8b): 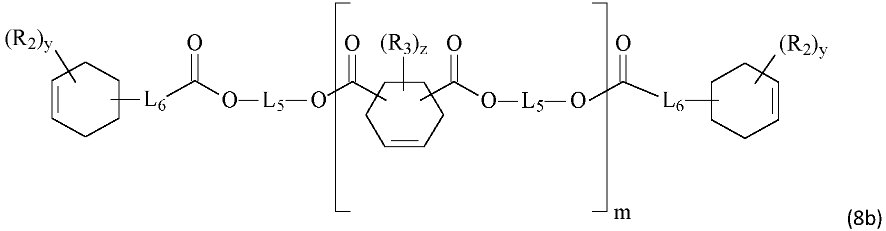 wherein L₅, L₆, R₂, R₂, m, y and z are as defined in Aspect 22 and 23.
Aspect 28. A composition comprising:
   a1) at least one cycloaliphatic epoxide polyester according to any one of Aspects 1 to 23; and
   b1) at least one cationically polymerizable component other than component a1).
Aspect 29. The composition of Aspect 28, wherein component b1) comprises at least one cationically polymerizable compound selected from an epoxy-functionalized compound other than component a1), an oxetane, an oxolane, a cyclic acetal, a cyclic lactone, a thiirane, a thietane, a spiro orthoester, a spiro orthocarbonate, a vinyl ether, a vinyl ester, an alcohol, a polyol, derivatives thereof and mixtures thereof.
Aspect 30. The composition of Aspect 28 or 29, wherein component b1) comprises at least one vinyl ether, preferably a polyvinylether or a vinyl ether comprising a (meth)acrylate group such as ethylene glycol divinyl ether, diethylene glycol divinyl ether, triethylene glycol divinyl ether, trimethylolpropane trivinyl ether, 2-vinyloxyethyl (meth)acrylate, 1-methyl-2-vinyloxyethyl (meth)acrylate, 2- or 3-vinyloxypropyl (meth)acrylate, 4-vinyloxybutyl (meth)acrylate, 2-(2-vinyloxyethoxy)ethyl (meth)acrylate or 2-(vinyloxyethoxyethoxy)ethyl (meth)acrylate.
Aspect 31. The composition of any one of Aspects 28 to 30, wherein component b1) comprises at least one oxetane, in particular at least one oxetane according to the following formula (9): 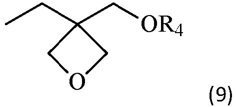
   wherein R₄ is selected from H, alkyl, aryl, alkylaryl, (meth)acryloyl, -CH₂-oxetanyl-CH₂-CH₃, -L₇-O-CH₂-oxetanyl-CH₂-CH₃;
   L₇ is a divalent linker, in particular -Si(CH₃)₂-, -CH₂-Ph-Ph-CH₂- or -CH₂-Ph-CH₂-[O-CH₂-Ph-CH₂]_{f}-;
   Ph is phenylene;
   f is 0 to 10.
Aspect 32. The composition according to Aspect 31, wherein component b1) comprises at least one oxetane according to formula (9) wherein R₄ is H, benzyl, -Si(CH₃)₂-O-CH₂-oxetanyl-CH₂-CH₃ or -CH₂-oxetanyl-CH₂-CH₃;
   preferably R₄ is H or -CH₂-oxetanyl-CH₂-CH₃.
Aspect 33. The composition according to any one of Aspects 28 to 32, wherein the weight ratio between component a1) and component b1) is 20:80 to 80:20, in particular 30:70 to 70:30, more particularly 40:60 to 60:40.
Aspect 34. A composition comprising:
   a2) at least one cycloaliphatic epoxide polyester according to any one of Aspects 1 to 23; and
   b2) at least one (meth)acrylate-functionalized component.
Aspect 35. The composition according to any one of Aspects 28 to 34, wherein the composition comprises at least one cationic photoinitiator component, in particular an onium salt or a metallocene salt, more particularly a halonium salt, a sulfonium salt, a sulfoxonium salt, a diazonium salt, a ferrocene salt, and mixtures thereof.
Aspect 36. The composition according to any one of Aspects 28 to 35, wherein the composition comprises a radical photoinitiator component.
Aspect 37. The composition according to Aspect 36, wherein the radical photoinitiator component comprises a Norrish type ! radical photoinitiator, more particularly a phosphine oxide or an acetophenone.
Aspect 38. The composition according to Aspect 37, wherein the radical photoinitiator component comprises a Norrish type II radical photoinitiator, more particularly a thioxanthone.
Aspect 39. The composition according to any one of Aspects 28 to 38, wherein the composition is an ink, coating, sealant, adhesive, molding, or 3D printing composition, in particular a coating composition, more particularly a metal coating composition.
Aspect 40. A process for the preparation of a cured product, comprising curing the composition according to any one of Aspects 28 to 39, in particular by exposing the composition to radiation such as UV, near-UV, visible, infrared, near-infrared, and/or electron beam radiation.
Aspect 41. A cured product obtained by curing the composition according to any one of Aspects 28 to 39 or according to the process of Aspect 40.
Aspect 42. A cured product according to Aspect 41, wherein the cured product is an ink, a coating, a sealant, an adhesive, a molded article or a 3D-printed article, in particular an ink or a coating, more particularly a metal coating.
Aspect 43. A use of a cycloaliphatic epoxide polyester according to any one of Aspects 1 to 23, for obtaining an ink, a coating, a sealant, an adhesive, a molded article or a 3D-printed article, in particular an ink or a coating, more particularly a metal coating.

The invention is illustrated with the following non-limiting examples.

### EXAM PLES

### Synthesis Example 1: cycloaliphatic epoxide polyester E1

### Synthesis of cyclohexene polyester C1

In a stirred reactor equipped with a distillation column, ethylene glycol (20.9 g, 0.34 mol) and cis-4-cyclohexene-1,2-dicarboxylic anhydride (152.2 g, 1.0 mol) were added, the mixture was heated to 150°C. Then, 3-cyclohexene-1-methanol (159.6 g, 1.42 mol) was added and the mixture was gradually heated to 240°C. When the acid number (AV) < 10 mg KOH/g, Cardura E10P (9.8 g, 0.03 mol) was added and the mixture was heated to 200°C until the AV < 0.5 mg KOH/g. The product was filtered (50 µm) to give polyester C1 as a yellow liquid (324.5 g).

### Epoxidation of C1

A reaction vessel was charged with cyclohexene polyester C1 (50 g, 365 mmol) and dichloromethane (950 mL) was added. The reaction mixture was cooled to an internal temperature of 3°C. 3-chloroperbenzoic acid (69.5% active, 90.63 g, 525 mmol) was added over 2h with vigorous stirring, while maintaining the internal temperature at 3-4°C. The turbid mixture was stirred vigorously for 18h and allowed to warm to 20°C.

The reaction mass was then filtered and the white solid washed with dichloromethane (2 x 50 mL). To the obtained filtrate was added a solution of sodium sulfite (100 g) in water (900 mL) and the biphasic mixture was stirred for 15 min. The mixture was phase separated and the organic phase washed with a solution of sodium hydrogen carbonate (50 g) in water (950 mL), and then with water (2 x 500 mL) and brine (1 × 500 mL).

The mixture was allowed to phase separate and the organic phase was separated, dried with magnesium sulfate (20 g) and filtered. The filtrate was concentrated *in vacuo* and the liquid product was then dried to constant weight (10 mbar, 40 °C).

This provided the desired cycloaliphatic epoxide polyester E1 (54 g, 80% theoretical yield).

### Synthesis Example 2: cycloaliphatic epoxide polyester E2

### Synthesis of cyclohexene polyester C2

In a stirred reactor equipped with a distillation column, ethylene glycol (164.7 g, 2.65 mol) and cis-4-cyclohexene-1,2-dicarboxylic anhydride (152.2 g, 1.0 mol) were added, the mixture was heated to 150°C. Then, 3-Cyclohexene-1-carboxylic acid (361.4 g, 2.86 mol) was added and the mixture was gradually heated to 240°C. When the acid number (AV) < 15 mg KOH/g, Cardura E10P (19.5 g, 0.06 mol) was added and the mixture was heated to 200°C until the AV < 0.5 mg KOH/g. The product was filtered (50 µm) to give polyester C2 as a yellow liquid (628.1 g).

### Epoxidation of C2

A reaction vessel was charged with cyclohexene polyester C2 (50 g, 285 mmol) and dichloromethane (850 mL) was added. The reaction mixture was cooled to an internal temperature of 3°C. 3-chloroperbenzoic acid (69.5% active, 70.8 g, 410 mmol) was added over 2h with vigorous stirring, while maintaining the internal temperature at 3-4°C. The turbid mixture was stirred vigorously for 18h and allowed to warm to 20°C.

The reaction mass was then filtered and the white solid washed with dichloromethane (2 x 50 mL). To the obtained filtrate was added a solution of sodium sulfite (100 g) in water (900 mL) and the biphasic mixture was stirred for 15 min. The mixture was phase separated and the organic phase washed with a solution of sodium hydrogen carbonate (50 g) in water (950 mL), and then with water (2 x 500 mL) and brine (1 × 500 mL).

The mixture was allowed to phase separate and the organic phase was collected, dried with magnesium sulfate (20 g) and filtered. The filtrate was concentrated *in vacuo* and the liquid product was then dried to constant weight (10 mbar, 40 °C).

This provided the desired cycloaliphatic epoxide polyester E2 (44 g, 60% of theoretical yield).

### Example 1: Polymerization of alkoxylated cycloaliphatic epoxides in presence of (meth)acrylates Materials

The list of materials used in the example is detailed in the following Table.

| Material | Composition | Supplier |
|---|---|---|
| Uvicure^{®} S130 | 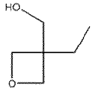 3-ethyl-3-hydroxymethyl-oxetane | Arkema |
| VEEA | 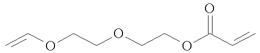 2-(2-vinyloxyethoxy)ethyl acrylate | Nippon Shokubai |
| TCM245 | 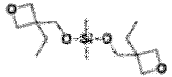 Silane, bis[(3-ethyl-3-oxetanyl)methoxy]dimethyl | Tronly |
| Uvicure^{®} S140 | 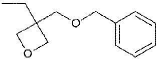 3-ethyl-3-(phenylmethoxymethyl)oxetane | Arkema |
| DOX | 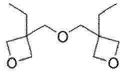 3,3'-(oxydimethanediyl)bis(3-ethyloxetane) | Tronly |
| SR454 | Ethoxylated 3 Trimethylolpropane Triacrylate | Arkema |
| ELO | Epoxidized linseed oil | Hobum Oleochemicals |
| SpeedCure^{®} 976 | (Sulfanediyldibenzene-4,1-diyl)bis(diphenylsulfonium) bis(hexafluoroantimonate) in propylene carbonate (50% by weight of active material) | Arkema |
| SpeedCure^{®} 73 | 2-hydroxy-2-methyl-1-phenylpropanone | Arkema |
| SpeedCure^{®} 938 | Bis-(4-t-butylphenyl)-iodonium hexafluorophosphate | Arkema |
| SpeedCure^{®} CPTX | 1-chloro-4-propoxythioxanthone | Arkema |
| BYK 307 | polyether modified polydimethylsiloxane | BYK |
| LANCO^{®} 2540 SF | Modified Polyolefin Wax - Micronized and Classified | Lubrizol |

### Formulations and results

Formulations were prepared by mixing the ingredients listed in the following table (amounts are indicated in parts by weight) at 30-40°C until full dissolution (about 3 hours).

| **Curing method** | **Mercury lamp cure** | | | | | | | **LED cure** | |
|---|---|---|---|---|---|---|---|---|---|
| **Formulation** | **15-5** | **15-8** | **15-14** | **15-16** | **15-18** | **15-23** | **15-6** | **15-20** | **15-25** |
| **Cycloaliphatic epoxide polyester E1** | 65 | 65 | 55 | 55 | 55 | 50 | - | 65 | 50 |
| **Cycloaliphatic epoxide polyester E2** | - | - | - | - | - | - | 65 | - | - |
| **VEEA** | 33 | - | - | - | - | 16 | 33 | 32.5 | 16.7 |
| **Uvicure^{®} S130** | - | 33 | - | - | - | 15.5 | - | - | - |
| **TCM 245** | | | 43 | - | - | - | | - | - |
| **Uvicure^{®} S140** | | | - | 43 | - | - | | - | - |
| **DOX** | | | - | - | 43 | - | | - | - |
| **SR454** | - | - | - | - | - | 14.7 | - | - | - |
| **ELO** | - | - | - | - | - | - | - | - | 15 |
| **SpeedCure^{®} 976** | 2 | 2 | 2 | 2 | 2 | 2 | 2 | - | - |
| **SpeedCure^{®} 73** | - | - | - | - | - | 1 | - | - | - |
| **SpeedCure^{®} 938** | - | - | - | - | - | - | - | 2 | 2 |
| **SpeedCure^{®} CPTX** | - | - | - | - | - | - | - | 0.5 | 0.5 |
| **BYK 307** | - | - | - | - | - | 0.2 | - | - | 0.2 |
| **LANCO^{®} 2540 SF** | - | | | - | - | 0.6 | - | - | 0.6 |
| **Total** | 100 | 100 | 100 | 100 | 100 | 100 | 100 | 100 | 100 |
| | | | | | | | | | |
| **Viscosity (25°C), cPs** | 320 | 633 | 680 | 415 | 401 | 200 | 294 | 337 | 332 |
| **Surface cure** | 20 | 30 | 10 | 10 | 15 | 30 | 13 | 6.5 | 5.6 |
| **Depth cure** | 20 | 25 | 10 | 10 | 15 | 30 | 13 | 6.5 | 6.7 |
| **Chemical resistance (24h)** | >100 | 88 | >100 | 95 | >100 | >100 | >100 | >100 | >100 |
| **Pendulum Hardness** | 198 | 169 | 149 | 148 | 170 | N.D | >200 | 157 | 147 |
| **Pencil Hardness** | F | F | 4H | HB | 3H | HB | HB | B | F |

### Viscosity measurement

Viscosity measurements were taken at 25°C using a cone and plate viscometer.

### Mercury lamp curing

The formulations were cured at 12 µm film thicknesses under a Mercury lamp using a belt curing instrument (Jenton International Ltd., model# JA2000VPXI-0000) with belt speed 30m/min and 1/3 power lamp intensity. The substrate used was standard black and white paper (Leneta form 3NT-31).

### LED lamp curing

The formulations were cured at 12 µm film thicknesses under a 395 nm LED lamp using a belt curing instrument (Jenton International Ltd., model# JA2000VPXI-0000) with belt speed 20m/min and 100% lamp intensity. The substrate used was standard black and white paper (Leneta form 3N-31).

### Surface cure and depth cure

Curing results were checked by lightly scratch for surface curing and compressed thumb twist for depth curing. Average curing speed was calculated using the belt speed divided by the passing number recorded when full cured resin was achieved. For practical purpose, curing speed less than 0.3m/min was categorised as "No cure". Duplicate or triplicate curing was done for the same formulation, average curing speed was used for final comparisons.

### Chemical resistance

Chemical resistance was measured via MEK double rubs. Measurement taken at the point the coating surface is broken by the solvent.

### Pendulum hardness

The instrument consists of a pendulum which is free to swing on two balls resting on a coated test panel. The pendulum hardness test is based on the principle that the amplitude of the pendulum's oscillation will decrease more quickly when supported on a softer surface. The hardness of any given coating is given by the number of oscillations made by the pendulum within the specified limits of amplitude determined by accurately positioned photo sensors. An electronic counter records the number of swings made by the pendulum.

### Pencil hardness

Pencil hardness is assessed using a range of different hardness pencils. A flat tipped pencil is pushed against the coated surface at a 45° angle. The coating is graded at the point that the surface is no longer broken by a specific pencil. Pencil hardness is graded with the following letters: 4H < 3H< 2H< H < F < HB < B < 2B < 3B < 4B

### Test results and discussion

The cycloaliphatic epoxide polyesters of the invention exhibited good compatibility with various cationically polymerizable compounds and (meth)acrylate-functionalized compounds. The viscosity of the formulations was acceptable. The coatings obtained with the compositions according to the invention exhibited good curing properties, chemical resistance especially after 24h and hardness.

## Claims

1. A cycloaliphatic epoxide polyester obtained by epoxidizing a cyclohexene polyester based on:
A) a polyol component;
B) a polyacid component; and
C) a monoalcohol or monoacid cycloalkene component;
wherein component C) has a hydroxyl functionality of 0 or 1, a carboxyl functionality of 0 or 1 and a hydroxyl + carboxyl functionality of 1.

2. The cycloaliphatic epoxide polyester, according to claim 1, wherein component A) comprises an ethylenically unsaturated polyol and/or component B) comprises an ethylenically unsaturated polyacid, preferably component B) comprises an ethylenically unsaturated polyacid.

3. The cycloaliphatic epoxide polyester according to claim 1 or 2, wherein component A) comprises:
A1) a diol component; and
A2) optionally a branching polyol component; and
component A1) comprises at least one diol selected from the group consisting of neopentyl glycol,
ethylene glycol, diethylene glycol, 1,2- or 1,3-propanediol, 1,2-, 1,3- or 1,4-butanediol, 1,5-pentanediol, 1,6-hexanediol, as well as the alkoxylated derivatives thereof, and combinations thereof.

4. The cycloaliphatic epoxide polyester according to any one of claims 1 to 3, wherein component B) comprises:
B1) a diacid component; and
B2) optionally a branching polyacid component; and
component B1) comprises at least one diacid having a bridged or non-bridged cyclohexene ring, preferably component B) comprises at least one diacid selected from tetrahydrophthalic acid, tetrahydrophthalic anhydride, methyltetrahydrophthalic acid, methyltetrahydrophthalic anhydride, norbornene dicarboxylic acid, norbornene dicarboxylic anhydride, and mixtures thereof.

5. The cycloaliphatic epoxide polyester according to any one of claims 1 to 4, wherein component C) comprises at least one bridged or non-bridged monoalcohol cyclohexene, preferably at least one non-bridged monoalcohol cyclohexene.

6. The cycloaliphatic epoxide polyester according to claim 5, wherein the monoalcohol cyclohexene is selected from 3-cyclohexene-1-ol, 4-cyclohexene-1-ol, 3-cyclohexene-1-methanol, 6-methyl-3-cyclohexene-1-methanol, 3-methyl-3-cyclohexene-1-methanol, 4-methyl-3-cyclohexene-1-methanol, 4,6-dimethyl-3-cyclohexene-1-methanol, 2-butyl-3-cyclohexene-1-methanol, 6-ethyl-3-cyclohexene-1-methanol, 1-methyl-3-cyclohexene-1-methanol, 1-ethyl-3-cyclohexene-1-methanol, 3,6-dimethyl-3-cyclohexene-1-methanol, 4,6-dimethyl-3-cyclohexene-1-methanol, 3-phenyl-3-cyclohexene-1-methanol, 6-phenyl-3-cyclohexene-1-methanol, 2,5-dimethyl-2-phenyl-3-cyclohexene-1-methanol, 5-norbornene-2-methanol and mixtures thereof.

7. The cycloaliphatic epoxide polyester according to any one of claims 1 to 4, wherein component C) comprises at least one bridged or non-bridged monoacid cyclohexene, preferably at least one non-bridged monoacid cyclohexene.

8. The cycloaliphatic epoxide polyester according to claim 7, wherein the monoacid cyclohexene is selected from 2-cyclohexene-1-carboxylic acid, 3-cyclohexene-1-carboxylic acid, 6-methyl-3-cyclohexene-1-carboxylic acid, 4-methyl-3-cyclohexene-1-carboxylic acid, 5-norbornene-2-carboxylic acid, 5-norbornene-2-acetic acid and mixtures thereof.

9. The cycloaliphatic epoxide polyester according to any one of claims 1 to 6, wherein the cycloaliphatic epoxide polyester is according to the following structure (7): 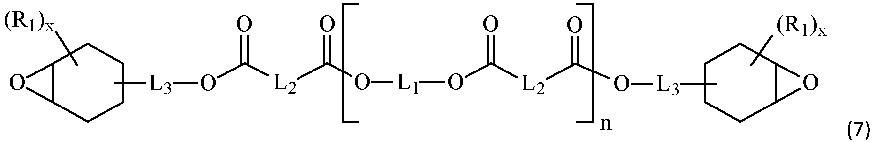 wherein
each L₁ is independently the residue of a diol;
each L₂ is independently the residue of a diacid or a derivative thereof;
each L₃ is independently a bond or a linker;
each R₁ is independently selected from alkyl or aryl or two R₁ groups may form an alkylene bridge.
n is from 1 to 20
each x is independently from 0 to 4.

10. The cycloaliphatic epoxide polyester according to any one of claims 1 to 4, 7 and 8, wherein the cycloaliphatic epoxide polyester is according to the following structure (8): 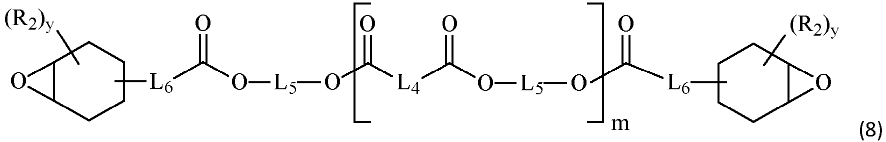 wherein
each L₄ is independently the residue of a diacid or a derivative thereof;
each L₅ is independently the residue of a diol;
each L₆ is independently a bond or a linker;
each R₂ is independently selected from alkyl or aryl or two R₁ groups may form an alkylene bridge.
m is from 1 to 20
each y is independently from 0 to 4.

11. A cyclohexene polyester based on:
A) a polyol component;
B) a polyacid component; and
C) a monoacid cyclohexene component;
wherein
component B) comprises more than 70% mol at least one diacid having a bridged or non-bridged cyclohexene ring based on the total number of moles of component B); and
component C) has a hydroxyl functionality of 0 and a carboxyl functionality of 1.

12. The cyclohexene polyester of claim 11, wherein the cyclohexene polyester corresponds to the following structure (7b): 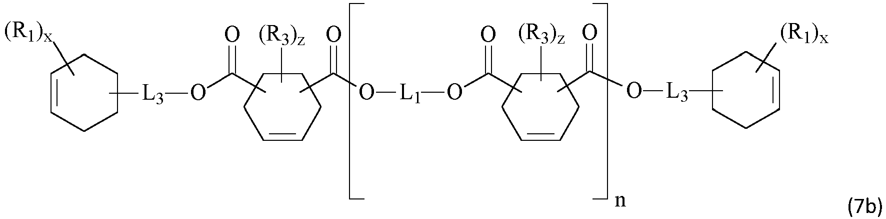 wherein L₁, L₃, R₁, R₃, n, x and z are as defined in claim 9.

13. A cyclohexene polyester based on:
A) a polyol component;
B) a polyacid component; and
C) a monoalcohol cyclohexene component;
wherein
component B) comprises at least one diacid having a bridged or non-bridged cyclohexene ring; and
component C) has a hydroxyl functionality of 1 and a carboxyl functionality of 0.

14. The cyclohexene polyester of claim 13, wherein the cyclohexene polyester corresponds to the following structure (8b): 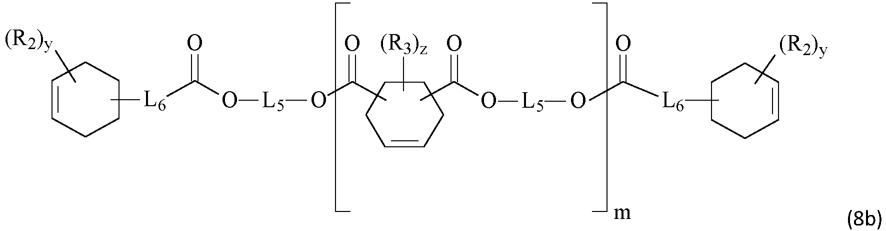 wherein L₅, L₆, R₂, R₂, m, y and z are as defined in claim 10.

15. A composition comprising:
a1) at least one cycloaliphatic epoxide polyester according to any one of claims 1 to 10; and
b1) at least one cationically polymerizable component other than component a1).

16. A composition comprising:
a2) at least one cycloaliphatic epoxide polyester according to any one of claims 1 to 10; and
b2) at least one (meth)acrylate-functionalized component.

17. A process for the preparation of a cured product, comprising curing the composition according to claim 15 or 16, in particular by exposing the composition to radiation such as UV, near-UV, visible, infrared, near-infrared, and/or electron beam radiation.

18. A cured product obtained by curing the composition according to claim 15 or 16 or according to the process of claim 17.

19. A cured product according to claim 18, wherein the cured product is an ink, a coating, a sealant, an adhesive, a molded article or a 3D-printed article, in particular an ink or a coating, more particularly a metal coating.

20. A use of a cycloaliphatic epoxide polyester according to any one of claims 1 to 10, for obtaining an ink, a coating, a sealant, an adhesive, a molded article or a 3D-printed article, in particular an ink or a coating, more particularly a metal coating.
